# EUROPEAN PATENT SPECIFICATION

(11) **EP 2 196 620 B1**
(45) Date of publication and mention of the grant of the patent: **27.06.2012**
(21) Application number: 08171713.4
(22) Date of filing: 15.12.2008
(51) Int. Cl.: E21B 23/08, E21B 47/00

(54) **A micro-logging system and method**
Mikroprotokollierungssystem und -verfahren
Système et procédé de micro-diagraphie

(43) Date of publication of application: 16.06.2010
(73) Proprietor: Services Pétroliers Schlumberger, 75007 Paris (FR); Schlumberger Holdings Limited, Tortola (VG); Schlumberger Technology B.V., 2514 JG The Hague (NL); PRAD Research And Development Limited, Road Town, Tortola (VG)
(72) Inventor: Chen, Kuo-Chiang, 92142 Clamart Cedex (FR); Smits, Jan, 92142 Clamart Cedex (FR); Homan, Dean, 92142 Clamart Cedex (FR); Hazen, Gary, 92142 Clamart Cedex (FR); Rosthal, Richard, 92142 Clamart Cedex (FR); Bonner, Steve, 92142 Clamart Cedex (FR); Wang, Hanming, 92142 Clamart Cedex (FR); Woodburn, Charles, 92142 Clamart Cedex (FR)
(74) Representative: Vandermolen, Mathieu

(56) References cited:
- GB-A- 2 284 257
- GB-A- 2 408 391
- US-A1- 2004 020 653
- US-A1- 2004 262 008
- US-B1- 6 281 489
- US-B1- 6 532 839

## Description

### FIELD OF THE INVENTION

An aspect of the invention relates to a micro-logging system. Another aspect of the invention also relates to a corresponding micro-logging method.

A particular application of the invention relates to the oilfield industry, for example in logging operations during production.

### BACKGROUND OF THE INVENTION

It is known in the art to investigate the properties of geological formation zones surrounding a borehole by means of wireline logging.

Patent US 5,955,884 describes apparatus and methods for investigating resistivity or conductivity of the earth formation zones surrounding a borehole using electromagnetic measuring techniques.

Patent US 3,745,822 describes an apparatus for determining temperature distribution around a well.

The hereinbefore mentioned apparatuses include a wireline logging tool adapted for disposition in the borehole drilled in earth formations. With such apparatuses, logging while producing a well results in disruption of production. Further, it may be difficult to deploy due to the completion geometry and complexity. Furthermore, various operators are required due to the weight of the logging tool string and complexity of the logging operation. As a consequence, a logging while producing operation is expensive.

Patent application WO 2006/005555 describes a sensor system comprising a plurality of sensors and data acquisition means for permanently monitoring the properties of geological formation zones surrounding a borehole. Nevertheless, such a permanent sensor system corresponds to a high capital investment and once installed is irretrievable.

Patent application US 2004/0020653, which is considered the closest prior art, describes a method for logging, controlling, or monitoring a subsea well or group of wells through a path not within production tubing. Preferred embodiments allow logging tools, wire rope, optic fibers, electrical cables, monitoring and measuring instruments and other items known to those skilled in the art of oil and gas production to be disposed into the well without interfering with the flow path through the production string. The preferred embodiment includes the mooring or tethering of an instrument pod over the sub-sea well. The instrument pod is designed provide on-board data storage, data processing, data receiving, and data transmission equipment, such that data from the well can be transmitted back to a receiving network where said data may be stored and processed into useful information for reservoir operators.

Patent US 6,532,839 describes methods and apparatus for the remote measurement of physical parameters. The apparatus includes a sensor, sensor instrumentation, a carbon coated optical fiber cable for extending between the sensor and the sensor instrumentation, a conduit for extending to a measurement location and configured to accommodate the optical fiber cable and the sensor, and a cable installing device configured to install the sensor and the optical fiber cable through the conduit and place the sensor at the measurement location. The cable installation device includes an apparatus for propelling a fluid along the conduit, such as a pump, a compressor, and the like. In the method, a sensor is installed at a measurement location by pumping the sensor and a carbon-coated optical fiber cable through a conduit, forming a seal around the cable where it enters the conduit, and connecting the cable to sensor instrumentation.

Patent US 6,281,489 describes a method for controlling production operations using fiber optic devices. An optical fiber carrying fiber-optic sensors is deployed downhole to provide information about downhole conditions. Parameters related to the chemicals being used for surface treatments are measured in real time and on-line, and these measured parameters are used to control the dosage of chemicals into the surface treatment system. The information is also used to control downhole devices that may be a packer, choke, sliding sleeve, perforating device, flow control valve, completion device, an anchor or any other device. Provision is also made for control of secondary recovery operations online using the downhole sensors to monitor the reservoir conditions. The method of generating motive power in a wellbore utilizing optical energy can be done directly or indirectly, e.g., by first producing electrical energy that is then converted to another form of energy.

### SUMMARY OF THE INVENTION

It is an object of the invention to propose a micro-logging system or method that overcomes one or more of the limitations of the existing logging system or method.

According to an aspect, the invention relates to a micro-logging system of a geological formation surrounding a cased borehole comprising a casing and a annulus, the micro-logging system comprising:
- a tubing comprising a conveying tubing permanently embedded in at least a section of the annulus and extending substantially parallel to the casing at least over a distance corresponding to a zone of interest,
- a micro-logging tool string deployable in the conveying tubing,
- means for deploying the micro-logging tool string in the conveying tubing at desired depths along the cased borehole, and
- stand-offs along the casing in the annulus for protecting the tubing against perforations.

According to optional aspect, the tubing may further comprise a return tubing coupled to the conveying tubing at a down-hole location of the cased borehole, the return tubing being permanently embedded in at least a section of the annulus.

The means for deploying the micro-logging tool string may comprise a pump coupling the conveying tubing to the return tubing at an up-hole location of the cased borehole such as to form a continuous tubing loop. Alternatively, the means for deploying the micro-logging tool string may comprise at least one slick line or one wireline coupled to one end of the micro-logging tool string and deployed by a drum.

A fluid may be filled in the conveying tubing and the return tubing, the fluid being chosen among the group of fluid comprising oil, mud, water, and synthetic fluid.

The micro-logging system may further comprise a control and data acquisition unit. The micro-logging tool and the control and data acquisition unit may comprise a first and a second wireless transmission module for transferring measured data, respectively. Alternatively, the micro-logging tool and the control and data acquisition unit may comprise a first and a second wire interface for transferring measured data, respectively. The control and data acquisition unit may be coupled to a satellite link. The micro-logging tool string may comprise a micro-resistivity tool, or a micro-temperature tool, or a micro-gamma-ray tool, or a micro-pressure tool, or a micro-magnetometer tool, or a combination thereof.

The conveying tubing may have a circular cross-section or an oval cross-section. The annulus may be filled with cement or an open-hole completion material, e.g. gravel pack.

According to a further aspect, the invention relates to a method of micro-logging a geological formation surrounding a cased borehole comprising a casing and an annulus, the micro-logging method comprising the steps of:
- providing a conveying tubing by embedding the conveying tubing in the annulus, the conveying tubing extending substantially parallel to the casing,
- deploying a micro-logging tool at least in the conveying tubing at, at least, a first depth along the cased borehole,
- measuring at least one characteristic of the geological formation surrounding the cased borehole at said depth,
- repeating the deployment and measurement steps at, at least, the first depth such as to monitor variation of the measured characteristic over time,
- inferring geological formation properties from the time varying measured characteristic, and
- providing stand-offs along the casing in the annulus for protecting the tubing against perforations.

According to optional aspect, the provision step may further comprise coupling the conveying tubing to a return tubing such as to form a continuous tubing loop, and the deployment step may consist in pumping a fluid up or down in the conveying tubing and the return tubing.

The deployment step may consist in deploying a slick line or a wireline coupled to the micro-logging tool string in at least the conveying tubing by means of a drum.

According to still a further aspect, the invention relates to an application of the micro-logging method of the invention to monitor occurrence of water breakthrough in a producing well by performing resistivity logs over time of the surrounding geological formation at least over a depth interval corresponding to a producing zone, and monitoring an evolution of a position of a resistivity jump over time.

According to another aspect, the invention relates to an application of the micro-logging method of the invention to monitor occurrence of steam breakthrough in a producing well by performing temperature logs over time of the surrounding geological formation at least over a depth interval corresponding to a producing zone, and monitoring an evolution of the temperature over time.

The invention enables to run the micro-logging tool string inside the conveying tubing without having the casing as a barrier along the geological formation zone of interest. There is no need any more to pull off the completion inside the well during logging operations. Thus, logging operations are possible while producing the well without any production interruption.

The micro-Logging system enables the time-lapse monitoring of a well in real time during production. With several wells drilled in a reservoir, i.e. an oil/gas field, each well being fitted with a system of the invention, the time-lapse data enables providing spatial information of the reservoir. For example, the system enables logging resistivity in order to differentiate water from oil due to their different resistivities, and temperature in order to differentiate water from steam due to different geothermal conditions. Thus, time-resolved multi-dimensional reservoir characterization during the complete production phase of the reservoir is feasible.

In contradistinction with typical openhole tools, the micro-logging tool of the invention is lighter, smaller and less expensive. Firstly, the system of the invention requires a lower capital investment because only the tubing is permanently installed with the well completion and, unlike permanent monitoring, expensive sensors and data acquisition system are either in the retrievable micro-logging tools or in the surface equipments. Secondly, the system of the invention requires lower operating cost because the whole system can be operated by a single operator on the well site. Thirdly, the system of the invention is reliable and cost effective to maintain because there is not any sensor permanently installed downhole.

These and other aspects of the invention will be apparent from and elucidated with reference to the embodiments described hereinafter.

### BRIEF DESCRIPTION OF THE DRAWINGS

The present invention is illustrated by way of example and not limited to the accompanying Figures, in which like references indicate similar elements:
FIG. 1 schematically shows an onshore hydrocarbon well location;
FIGS. 2 and 3 are front cross-section views schematically showing close-up details of FIG. 1;
FIG. 4 is a top cross-section view schematically showing a close-up detail of FIG. 1;
FIG. 5 shows an embodiment of a micro-logging tool coupled to a cable;
FIGS. 6 and 7 show a first and a second embodiment of the micro-logging tool for performing resistivity measurements;
FIG. 8 shows detailed front cross-section view (left hand side) and top cross-section view along plane AA (top right hand side) and BB (bottom right hand side) illustrating the connections of the various coils in the micro-logging tool of FIGS. 6 or 7;
FIG. 9 is a top cross-section view schematically showing a close-up detail of a variant embodiment of the conveying tubing shown in FIG. 1;
FIG. 10 illustrates another variant embodiment of the micro-logging tool enabling focusing;
FIG. 11 further illustrates an alternative of one embodiment of the focused micro-logging tool of FIG. 10;
FIG. 12 illustrates the use of the directional sensor in determining the orientation of focusing;
FIG. 13 shows an alternate embodiment of the casing and conveying tubing;
FIG. 14 shows a micro-logging tool performing temperature measurements;
FIG. 15 shows a first and second means for deploying the micro-logging tool, the micro-logging tool being connected to a wireline cable;
FIG. 16 shows a third means for deploying the micro-logging tool, the micro-logging tool being stand-alone;
FIGS. 17 and 18 illustrate operation of the micro-logging system with the deploying means of FIG. 15;
FIG. 19 illustrates operation of the micro-logging system with the deploying means of FIG. 16;
FIG. 20 is a front cross-section view in a cased well illustrating an alternate completion;
FIG. 21 is a front cross-section view in a cased well illustrating another alternate completion;
FIG. 22 shows a first application wherein time-lapse data related to the geological formation resistivity are measured during the production phase;
FIG. 23 shows a second application wherein time-lapse data related to the measured position of the casing collars for depth correlation for any kind of measurements log;
FIG. 24 shows a third application wherein time-lapse data related to resistivity survey are used to detect water breakthrough or cross flow;
FIG. 25 shows a fourth application wherein the micro-logging system of the invention is used to perform cross-well resistivity survey;
FIGS. 26 and 27 show a fifth application wherein time-lapse data related to resistivity survey are used to detect non-uniform water breakthrough in horizontal well;
FIG. 28 shows a sixth application wherein time-lapse data related to the temperature profile of the well is measured during the production phase;
FIG. 29 shows a seventh application wherein time-lapse data related to the geological formation resistivity and the temperature profile of the well;
FIG. 30 shows an eighth application wherein time-lapse data related to simultaneous resistivity and temperature surveys are used to detect steam breakthrough; and
FIGS. 31 and 32 show a ninth application wherein a plurality of micro-logging system according to the invention is used to perform time-lapse reservoir characterization during production.

### DETAILED DESCRIPTION OF THE INVENTION

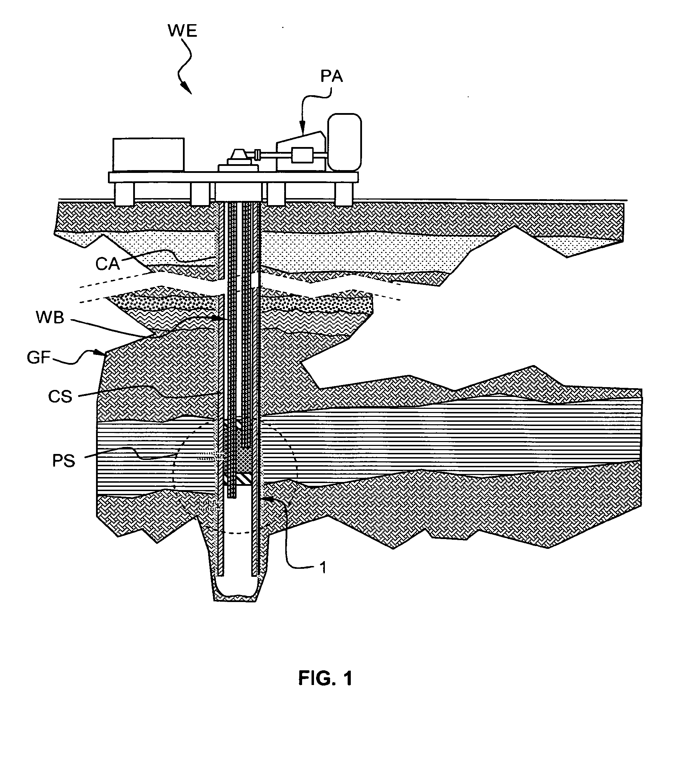

FIG. 1 schematically shows an onshore hydrocarbon well location and equipments WE above a hydrocarbon geological formation GF after drilling operation has been carried out, after a drill pipe has been run, after cementing, completion and perforation operations have been carried out. The well is beginning producing hydrocarbon, e.g. oil and/or gas. At this stage, the well bore WB is a cased borehole comprising a casing CS and an annulus CA. The annulus may be filled with cement or an open-hole completion material, for example gravel pack. The annulus CA comprising a tubing 1 made of a conveying tubing coupled to a return tubing at a down-hole location of the cased borehole, the tubing 1 being permanently embedded in the annulus CA. The tubing 1 extends substantially parallel to the casing. Downhole, the producing section PS of the well typically comprises perforations, production packers and production tubing at a depth corresponding to a hydrocarbon-bearing zone of the hydrocarbon geological formation GF. At the surface, the production tubing is coupled to appropriate surface production arrangement PA typically comprising pumping arrangement, separator and tank, etc....The precise design of the down-hole producing section and surface production arrangement is not germane to the present invention, and thus is not described in detail here.

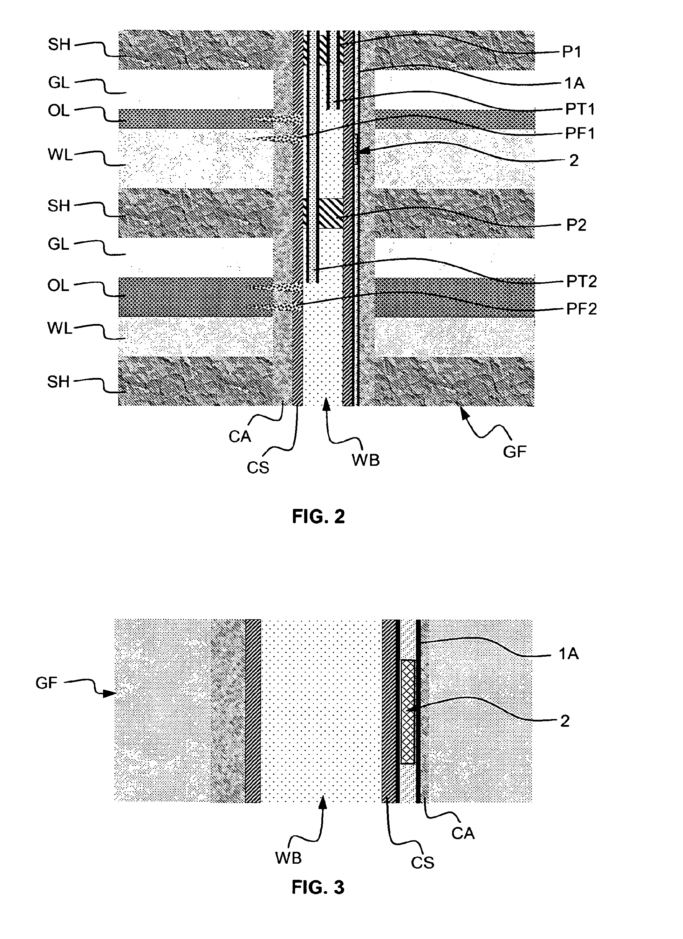

FIGS. 2 and 3 are front cross-section views schematically showing close-up details of FIG. 1. The producing hydrocarbon well WB comprises a cased borehole in a geological formation GF comprising layers of oil OL, gas GL, water WL and shale SH. The cased borehole comprises a casing CS and an annulus CA. It further comprises a completion consisting of a first P1 and second P2 packer, a first PT1 and second PT2 production tubing, and a first PF1 and second PF2 series of perforation. According to the invention, a micro-logging tool 2 is pumped down to a desired location through a conveying tubing 1 A. The conveying tubing 1 A is positioned outside the steel casing CS and inside the concrete layer of the annulus CA. The micro-logging tool 2 placed inside the tubing 1 A has direct access to the geological formation GF, namely without having the casing as a barrier relatively to the geological formation. The micro-logging tool has also access to the whole depth of the well, independently of the completion inside the casing. As the micro-logging tool is run inside the conveying tubing 1A, there is no need to pull off the completion inside the well during logging runs.

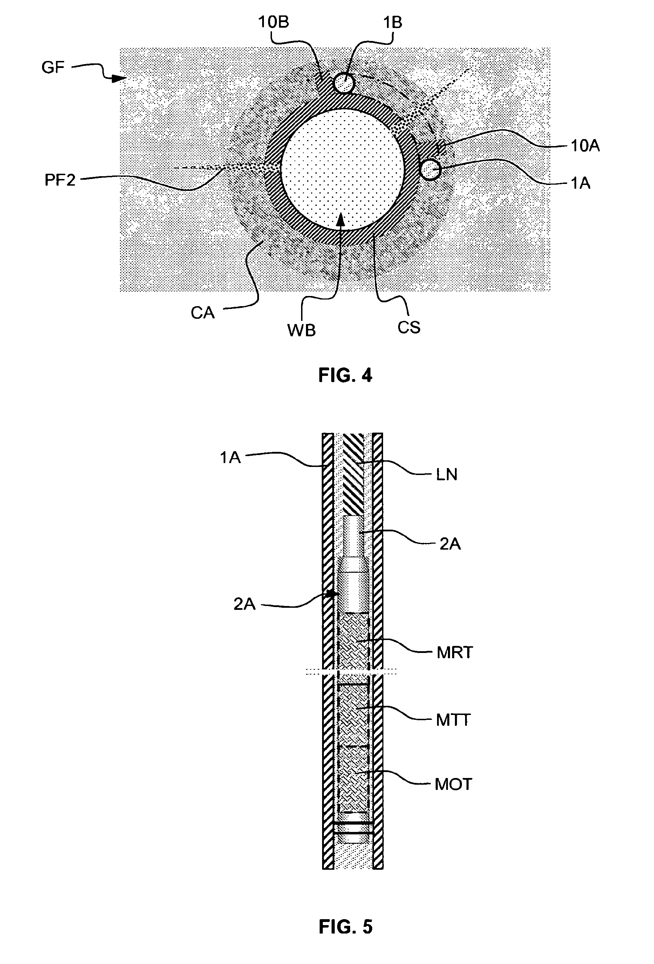

FIG. 4 is a top cross-section view schematically showing a close-up detail of FIG. 1. The conveying tubing 1A may be coupled to a return tubing 1 B at a down-hole location (not shown) of the cased borehole. The conveying tubing 1 A and return tubing 1 B run down the well from one side and come back to the ground from the other side. The length of the tubing is such as to cover a desired depth of the well, for example all the depth of the well. The diameter of the tubing is such as to be embedded in typical annulus CA. For example, the inside diameter is in the order of 1.27 cm (0.5 inches). A micro-logging tool can be pumped down from one end of the tubing (conveying tubing), and the fluid inside the tubing may flow back to the ground from the other end of the tubing (return tubing). The fluid may be recycled back to the conveying tubing on the ground during pumping operations.

The tubing 1A, 1B may be made of non-conductive material for resistivity survey, for example fiberglass composite materials. The tubing may be made of conductive material like steel for non-resistivity survey, for example temperature measurements. Advantageously, the tubing is filled with oil, mud, water, or synthetic fluid. The fluid may serve two purposes. Firstly, it may serves as a means of pumping down and up the micro-logging tool 2 at a desired depth into the well. Secondly, it may serves for providing a hydrostatic pressure balancing the stress inside and outside the non-conductive tubing, if the yield strength of the material and the thickness of the tubing are not strong enough to sustain the forces generated by down-hole environments. The fluid may be doped by additives in order to provide sufficient fluid density for pressure balancing during and after the installation of the tubing.

The tubing 1A, 1 B may be protected by stand-offs 10A, 10B along the casing in order to prevent the tubing from being crushed during the installation of the completion. The stand-offs 10A, 10B can be welded onto the casing CS.

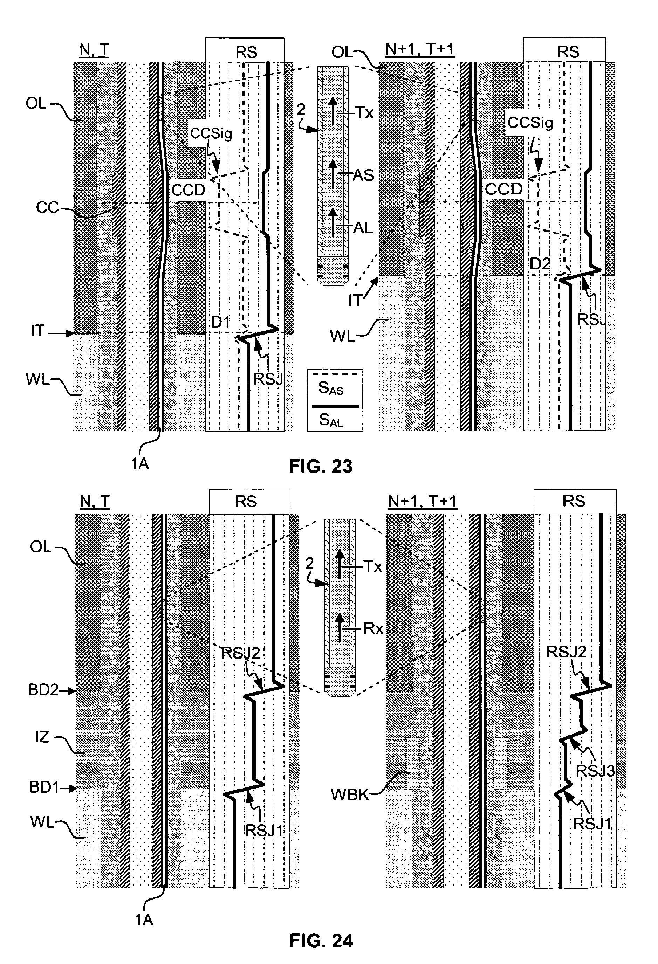

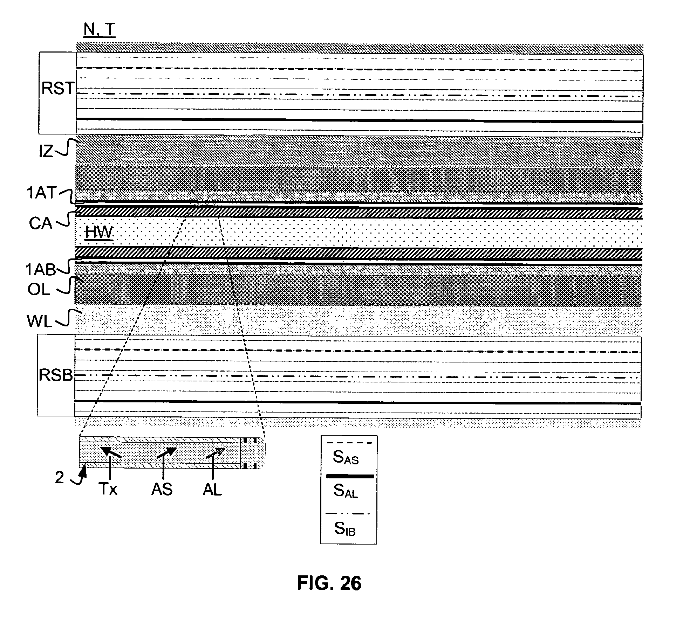

According to another embodiment, the tubing may also be a single tubing for the micro-logging tool to be conveyed down and up the well. This embodiment may be particularly interesting when gravity is sufficient to convey the micro-logging tool. Further, it is to be noted that the conveying tubing may not be strictly straight. It may deviate from the straight line to pass nearby the casing collars (as an example, see FIG. 23). In addition, it may need to pass through doglegs in order to reach horizontal sections of the well (as an example, see FIG. 26). Thus, contrary to typical openhole tools that are rigid, the micro-logging tool of the invention is flexible to pass through the above mentioned curvatures.

FIGS. 5 to 12 show various embodiments of micro-logging tools 2. The micro-logging tool is a down-hole tool string. The outside diameter of the micro-logging tool 2 is slightly smaller than the internal diameter of the conveying tubing 1A, for example the outside diameter is in the order to 1.27 cm (0.5 inches). It may be connected to a wireline cable, a conductive slickline, or fiber optics slickline LN. Alternatively, it may be wireless. The wireline cable LN and the tool 2 are connected via a cable head 2A, providing an easy connection on the well location. It may be pumped down into the well through the conveying tubing 1 A.

The micro-logging tool 2 may comprise one or a plurality of sensors, performing one or multiple measurement types. For example, the micro-logging tool 2 may comprise a micro-resistivity tool MRT coupled to a micro-temperature tool MTT in order to obtain both resistivity and temperature logs. All kinds and/or combination of measurements tools MOT are possible, e.g. gamma-ray, pressure, magnetometer, etc....

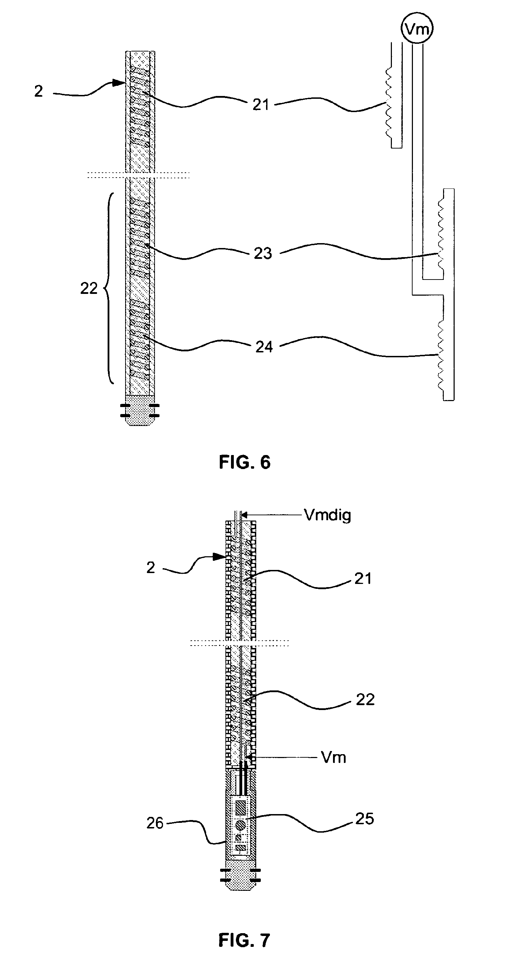

FIGS. 6 and 7 show micro-logging tool 2 performing resistivity measurements. The micro-logging tool measures the conductivity or the resistivity of the surrounding formation by either induction or propagation methods that are known in the art. The measurements can be either absolute (amplitude and/or phase measurements, compensated dual resistivity CDR and array resistivity compensated ARC type measurements) or differential measurements. The frequencies of the excitation and measured signals can be single or multiple frequencies.

In the first embodiment shown in FIG. 6, the micro-logging tool comprises three coils sonde, namely a transmitter coil 21, a first 23 and second 24 receiver coil. The coils form one array with a determined depth of investigation.

The right hand side of FIG. 6 illustrates the circuit diagram of the three-coil induction sonde. The transmitter induces eddy currents in the surrounding zone, the eddy current strength being proportional to the conductivity of the surrounding zone. The receiver array 22, including the first 23 and second 24 receiver coils, picks up a voltage Vm that is proportional to strength of the eddy current in the surrounding zone. The conductivity of the formation can be determined based on said voltage.

In this embodiment, the micro-logging tool mainly comprises sensors, while a control and acquisition unit is located up-hole in surface equipments. Indeed, the portion that may be located down-hole needs to withstand hostile down-hole environment. This portion is only limited to the sonde. The up-hole control and acquisition unit may comprise standard electronic components. Thus, the micro-logging tool is simple and the cost of the micro-logging tool is lowered.

The micro-logging tool may comprise a plurality of receiver arrays, for example a short and a deep receiver arrays having different radial depth of investigation in the geological formation surrounding the borehole. The short receiver arrays pick up most of the signals nearby the micro-logging tool. The deep receiver arrays pick up signals farther away from the micro-logging tool. As an example, the short radial depth of investigation may be in the order of a few centimeters or inches, while the deep radial depth of investigation may be in the order of thirty meters (hundred feet). A micro-logging tool comprising a plurality of array distances enables adapting the micro-logging tool response to different casing size by getting rid of the parasitic signals generated by the steel casing closed to the conveying tubing.

Further, the micro-logging tool may be operated according to various frequencies. For example, inducing eddy current of low frequencies in the formation enables performing extra-deep resistivity measurements.

Typically, the depth of investigation of the micro-logging tool can be increased by increasing the spacing of the array and decreasing the frequencies.

In the second embodiment shown in FIG. 7, the micro-logging tool further comprises an analogical to digital converter and transmitter module 25. This additional module may be packaged inside a housing 26 and located right beside the receiver array. The module comprises a minimum amount of electronic components. The module receives the measured signals Vm from the receiving coils 22, digitalizes said signals, then sends the digitalized signals Vmdig to the surface equipments. The digitized receiver signal is not interfered by the large transmitter signals. Thus, the drawbacks of directly sending to the surface the received signals having low Signal-to-Noise ratio, especially due to the cross talks from the transmitter signals, is avoided.

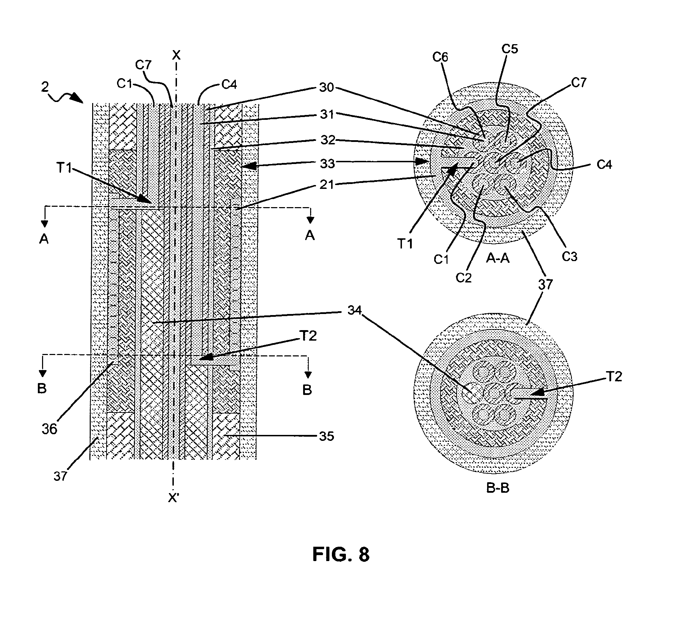

FIG. 8 shows detailed front cross-section view (left hand side) and top cross-section view along plane AA (top right hand side) and BB (bottom right hand side) illustrating the connections of the various coils in the micro-logging tool of FIGS. 6 and 7. The coil shown on FIG. 8 may be either a transmitter coil 21 or a receiver coil 22.

In the micro-logging tool used for resistivity measurements, the various coils are connected either to the wireline cable head or to the analogical to digital converter and transmitter module through a plurality of connectors. As an example seven connectors C1, C2, C3, C4, C5, C6 and C7 are shown in FIG. 8. The connectors are located in the central portion of the micro-logging tool 2. Each connector comprises a conductor 31 electrically insulated from the other by insulation 30. Each connector may further comprise an electromagnetic shielding (not shown) in the insulation layer in order to minimize cross-talk effects. The plurality of connectors is bonded together with a filler material 32 forming a connector bundle. The filler material may be a non-conductive epoxy or another composite material. At termination point, namely where the connectors connect to the coil, for example at termination points T1 and T4 as shown in FIG. 8, a filler tube 34 with the same diameter as the conductor, e.g. C1, is positioned in order to maintain the constant diameter of the conductor bundle. Bobbin sections 33 and spacer sections 35 are positioned in an alternate manner around the bundle. The bobbin and spacer sections are made of non-conductive composites. The material of the bobbin section has more rigidity than the spacer section. The bobbin section 33 is more rigid so that the coil, as an example 21, can be winded on the external face of the bobbin section and maintains the shape of the coil to resist external forces. The spacer section 35 is less rigid, and may even be elastic so that the micro-logging tool can be flexible enough to bend and pass through un-straight portions of the conveying tubing.

The coil comprises a wire, e.g. a copper wire winded on the external face of the bobbin section. As illustrated, the coil starts from a first termination point T1 and return to a second termination point T4. The magnetic moment of the coil is determined by the wire length, namely the number of turns of the coil. Thus, a magnetic moment similar to typical open-hole resistivity tools can be achieved despite the small diameter of the micro-logging tool.

Though, FIG. 8 shows a coil having wire turns perpendicularly to the tool axis XX' and generating a magnetic moment in the direction of the micro-logging tool axis XX', the coil can be winded according to various fashions so as to generate different directions of the magnetic moment. For example, a coil having tilted wire turns relatively to the tool axis XX' generates a moment having axial and radial components deviating from the tool axis in order to provide directional sensitivity. The coil, for example 21, is further embedded with filler material 36 for avoiding any void space in order to withstand the absolute hydrostatic pressure of the fluid in the conveying tubing.

The bundle, bobbin section and spacer section are further wrapped with an outer sleeve 37 providing protection and hydraulically sealing the internal portion of the micro-logging tool relatively to the outside environment. The outer sleeve 37 may have inner and outer layers. The inner layer may be a seamless rubber tube providing sealing and prevent leaking. The outer layer may be made of composite materials providing mechanical strength, especially tensile strength in order to maintain the mechanical integrity of the micro-logging tool 2.

Advantageously, the micro-logging tool 2 can also be made part of the wireline cable, thus avoiding failure problem with the connections in the cable head.

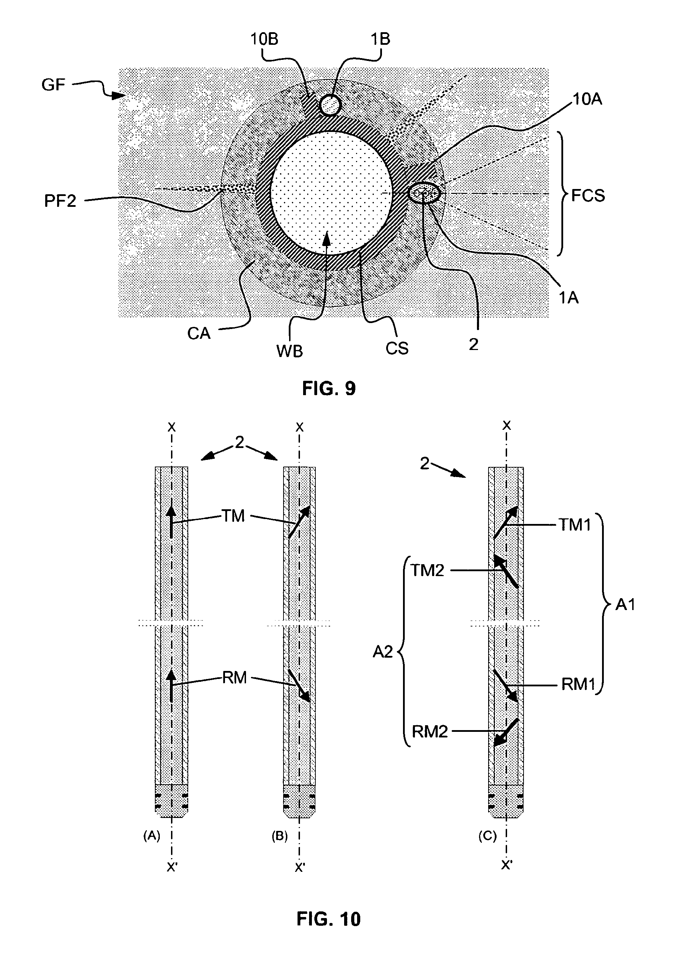

FIG. 9 is a top cross-section view schematically showing a close-up detail of a variant embodiment of the conveying tubing shown in FIG. 1. The conveying tubing 1A and the micro-logging tool 2 have a non-circular cross-section, for example an oval cross-section. Thus, the micro-logging tool 2 is oriented in a direction such that the focusing FCS is pointed towards the geological formation GF instead of the casing CS. This variant embodiment requires orienting the conveying tubing 1A in the right direction with respect to casing CS during annulus CA cementing operation, placing the micro-logging tool 2 in the right direction when it is run in the conveying tubing 1A. By orienting the conveying tubing 1 A and the micro-logging tool 2, the variant embodiment eliminates, at least greatly reduces the parasitic effect of the casing CS signal on the focused signal.

FIG. 10 illustrates another variant embodiment of the micro-logging tool 2 enabling focusing by modifying the direction of the transmitter TM and receiver RM moments with a conveying tubing and micro-logging tool having a circular cross-section. In the left-hand side part (A) of FIG. 8, the transmitter moment TM and receiver moment RM directions are both in the axial direction XX'. Thus, there is no focusing as the contribution of the surrounding signals is azimuthally uniform. In the middle part (B) of FIG. 8, the transmitter moment TM and receiver moment RM directions are in opposite directions. Thus, there is an azimuthal focusing as the contribution of the surrounding signals is not azimuthally uniform. In the right-hand side part (C) of FIG. 8, the micro-logging tool comprises two separate transmitter and receiver arrays A1, A2, each transmitter moment TM1, TM2and receiver moment RM1, RM2 directions being in opposite directions. Thus, the two separate arrays A1, A2 focus at opposite directions, the two arrays A1, A2 being sensitive to two directions that are 180 degree apart.

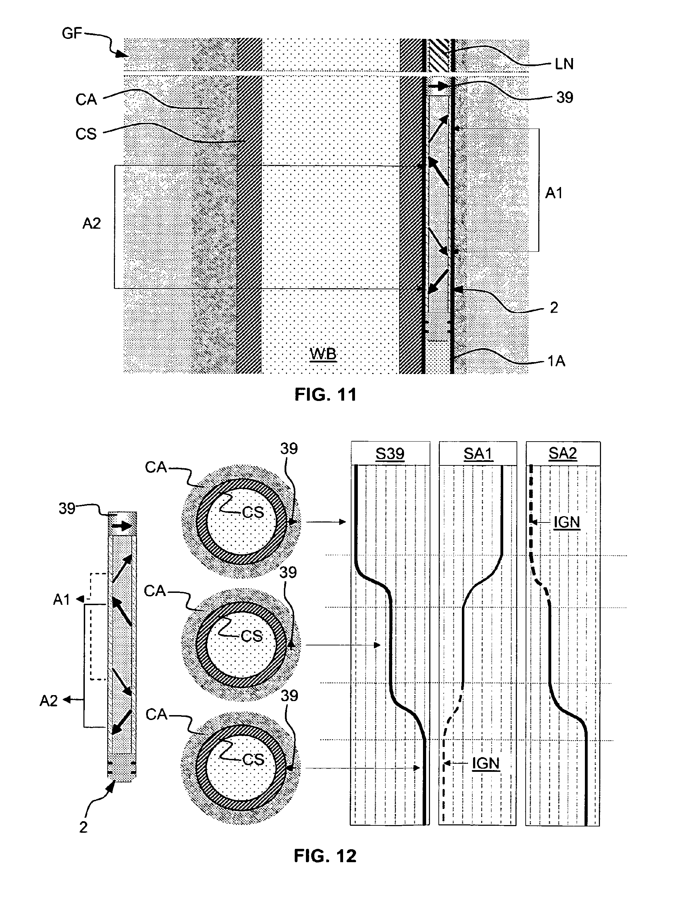

FIG. 11 further illustrates the micro-logging tool of FIG. 10 right-hand side part (C) wherein the micro-logging tool 2 further comprises a sensor 39 providing directional information. As examples, the directional sensor 39 may be a magnetometer or a solid-state gyroscope. The directional sensor 39 enables determining the azimuthal orientation of the two arrays A1, A2 relative to the casing CS.

FIG. 12 illustrates the use of the directional sensor 39 in determining the orientation of focusing. More precisely, FIG. 12 shows a side cross-section view (left-hand side part) of a micro-logging tool 2, top cross-section views in a cased borehole according to three different azimuths of the micro-logging tool (middle part - from top to bottom, respectively), and signal logs of the directional sensor S39, the first array SA1 and the second array SA2 (right-hand side part - from right to left, respectively). The direction of the directional sensor 39 is such as to be identical to the focusing direction of the first array A1, and opposite to that of the second array A2. In the top middle part view, the directional sensor 39 is pointing away from the casing CS. The directional sensor 39 generates a low signal level S39. This enables determining that the first array is facing the formation GF and the second array A2 is facing the casing CS. The measurements of the second array A2 are ignored IGN (dotted line section). In the bottom middle part view, the directional sensor 39 is pointing toward the casing CS. The directional sensor 39 generates a high signal level S39. This enables determining that the second array A2 is facing the formation GF and the first array A1 is facing the casing CS. The measurements of the first array A1 are ignored IGN (dotted line section). In the central middle part view, the directional sensor 39, the first A1 and second A2 arrays generate signals of intermediate level. This enables determining that neither the first array A1, nor the second array A2 is completely focused toward the formation GF. The measurements may be ignored and the operator may rotate the micro-logging tool in order to focus either the first array A1, or the second array A2 toward the formation GF.

Though not shown in the preceding FIGS. 10-12, a micro-logging tool comprising more than two arrays with different directions of focusing can also be implemented.

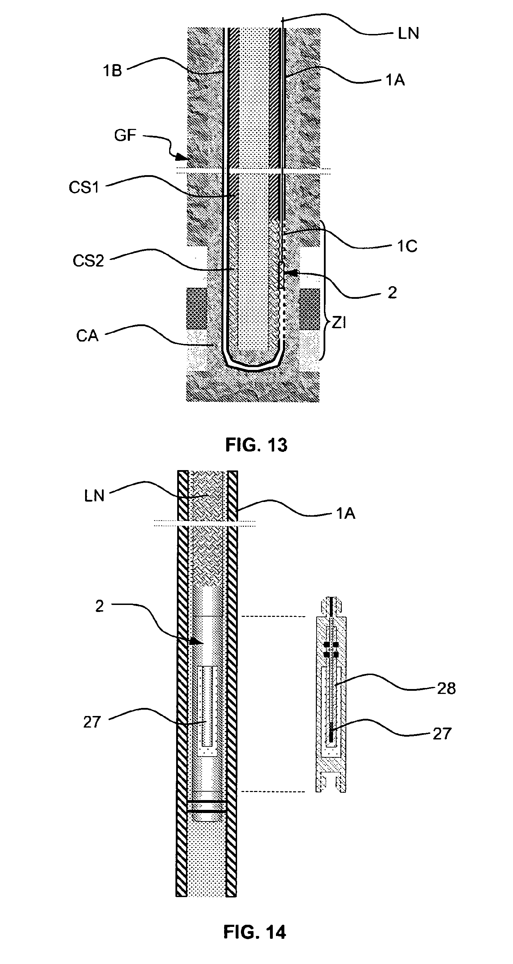

FIG. 13 shows another embodiment of the casing CS and conveying tubing 1A eliminating, at least greatly reducing the parasitic effect of the casing signal on the focused signal. A portion of the casing CS2 can be made of non-magnetic metallic materials, while a portion of the conveying tubing 1C can be made of non-conductive material. Said portions correspond to depths where the zones of interest ZI are located, namely zones where measurements are to be performed. Thus, the parasitic signals from the magnetic steel casing can be rejected. In the portions of the well where there is not any interest in measuring resistivity of the surrounding formation, the well can be cased with regular magnetic steel casing CS1 and metallic conveying tubing 1 A.

FIG. 14 shows a micro-logging tool 2 performing temperature measurements. The micro-logging tool measures the temperature of the geological formation surrounding the conveying tubing 1A. The temperature measurement can be used to differentiate water from steam due to different geothermal conditions in the surrounding formation. The micro-logging tool 2 comprises a thermocouple 27. The thermocouple 27 is fitted in a housing 28 which is exposed to the fluid of the conveying tubing such as to limit the heat capacity and have a quick response of the temperature variations of the environment. As it is known in the art, a thermocouple comprises two different materials that generate a voltage proportional to temperature variation. The thermocouple 27 may be calibrated in order to determine absolute temperature of the formation.

Though, not shown in the drawings, other temperature measurements means may replace the thermocouple, for example fiber optics cable.

The micro-logging tool comprising such a temperature measurement means runs through the conveying tubing on the side of the casing enables establishing a continuous depth (or time) log of temperature of the nearby formation. These logs enable describing the geothermal condition of the well along its depth.

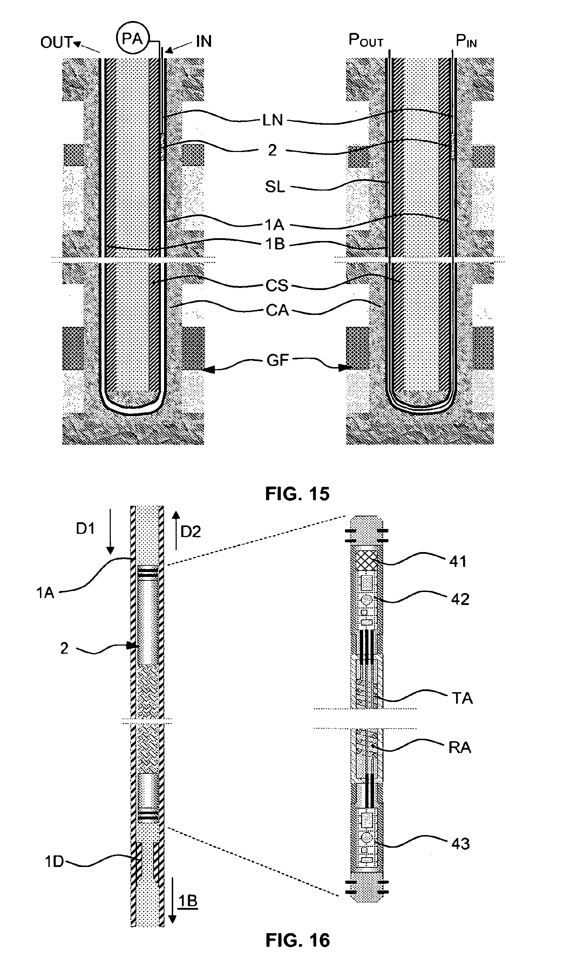

FIGS. 15 to 19 describe various means for deploying the micro-logging tool 2 in the conveying tubing 1A at desired depths along the cased borehole WB.

FIG. 15 left-hand side shows a micro-logging tool 2 connected to a wireline cable LN. The conveying tubing 1 A is coupled to a pumping arrangement PA at the surface. The micro-logging tool 2 can be conveyed down at the desirable depth via the conveying tubing 1A by pumping a fluid at a first end IN of the conveying tubing 1A and let the fluid flowing out of the return tubing 1 B at a second end OUT. Subsequently, the micro-logging tool 2 can be conveyed up at another desirable depth by pulling the wireline cable LN.

FIG. 15 right-hand side shows a micro-logging tool connected by a first end PIN and a second end POUT to a first cable SL and a second cable LN, respectively. The first cable SL may a slick line. The second cable LN may be a wireline cable. At the beginning of a logging operation, the micro-logging tool 2 ends are connected to the respective cable LN, SL. The micro-logging tool 2 can be conveyed down into the conveying tubing 1A at the desirable depth by pulling the other end of the first cable SL. The micro-logging tool can be conveyed up into the conveying tubing 1 A at the desirable depth or pulled out of the conveying tubing 1A by pulling the other end of the second cable LN.

FIG. 16 shows a stand-alone micro-logging tool 2, namely a micro-logging tool where the wireline cable is completely eliminated. The micro-logging tool 2 is powered by batteries 41 and operated in memory mode. It comprises the transmitter electronic module 42, the receiver electronic module 43 coupled to the transmitter array TA and the receiver array RA, respectively. The conveying tubing 1A is coupled to a pumping arrangement at the surface (not shown in FIG. 16). The pumping arrangement can pump fluid according to a first direction D1 or a second reversed direction D2. A restriction 1 D is positioned inside the conveying tubing 1A, for example close to the bottom of the well. Thus, the micro-logging tool 2 can travel and log most of the depth of the well. The micro-logging tool 2 may be pumped down or up into the well depending on the operation of the pumping arrangement. When the micro-logging tool is conveyed down D1 and reaches the restriction 1D, the pressure uphole rises. This gives a positive indication that the tool has reached the bottom of the well. The pumping arrangement may be switched to reverse D2 the flow of the fluid in the conveying tubing 1A in order to convey up the micro-logging tool 2. The depth/measurements correlation of different logging runs may be achieved either by matching the casing collar locations, or by pumping the micro-logging tool at constant flow rate. In this case, the flow rate of the pumping arrangement is also recorded so as to measure any variation of the pumping rate.

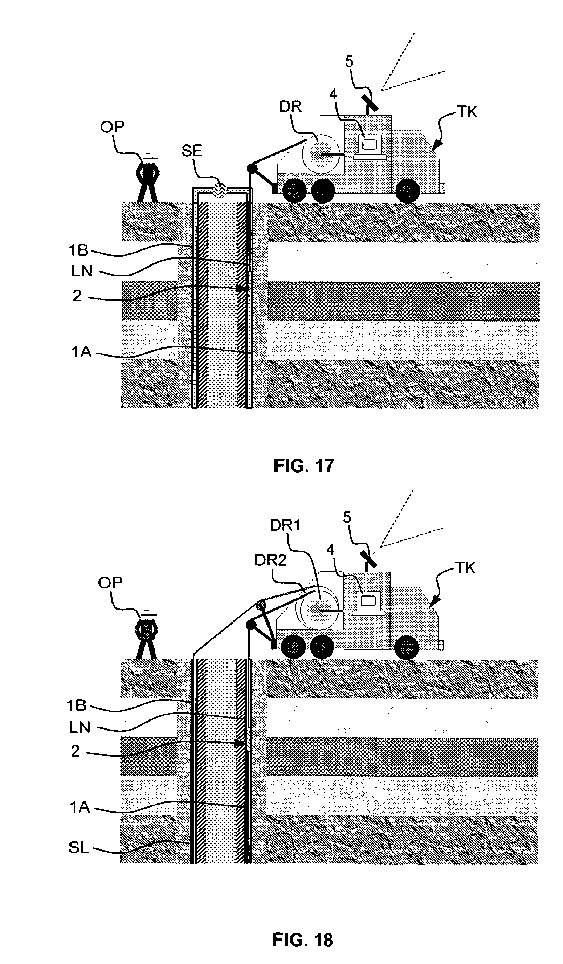

FIG. 17 illustrates operation of the micro-logging system with the deploying means of FIG. 15 left-hand side. The operator OP connects the conveying tubing 1A and the return tubing 1 B with a set of surface equipment SE comprising a portable pump, hydraulic loops, miniature blow-out preventer and wireline pressure seal port. The wireline pressure seal port enables running the wireline cable into and out of the tubing forming a hydraulic loop under pressure. A truck TK may comprise an appropriate drum DR for pulling the wireline cable LN. The micro-logging tool 2 coupled to the wireline LN is conveyed down to the desirable depth by circulating fluid in the hydraulic loop, and pulled out of the hole by means of the wireline LN while logging. The real-time data that are measured by the micro-logging tool 2 are transmitted to a control and data acquisition unit 4 in the truck TK. The real-time data may be further transmitted via e.g. satellite link 5 to client's office.

FIG. 18 illustrates operation of the micro-logging system with the deploying means of FIG. 15 right-hand side. Advantageously, a cable e.g. a slick line SL is positioned in the conveying 1A and return 1B tubing during the completion operations. Before the logging operations, the operator OP connects a first end of the micro-logging tool 2 to the wireline of a first drum DR1 on the truck TK, a second end of the micro-logging tool to the end of the slick line SL sticking out of the conveying tubing 1A, and the other end of the slick line SL sticking out of the return tubing 1 B to a second drum DR2 on the truck TK. The truck TK comprises two appropriate drums DR1, DR2, the first one DR1 for pulling the wireline cable LN and the second one DR2 for the slick line SL. According to this conveyance method, there is no need for a hydraulic pump. The micro-logging tool 2 is conveyed down to the desirable depth in the conveying tubing by pulling the slick line SL. The micro-logging tool is conveyed up by pulling the wire line LN. When the micro-logging tool 2 is pull out of the tubing 1A, the slick line SL is back to its initial position. The real-time data that are measured by the micro-logging tool 2 are transmitted to a control and data acquisition unit 4 in the truck TK. The real-time data may be further transmitted via e.g. satellite link 5 to client's office.

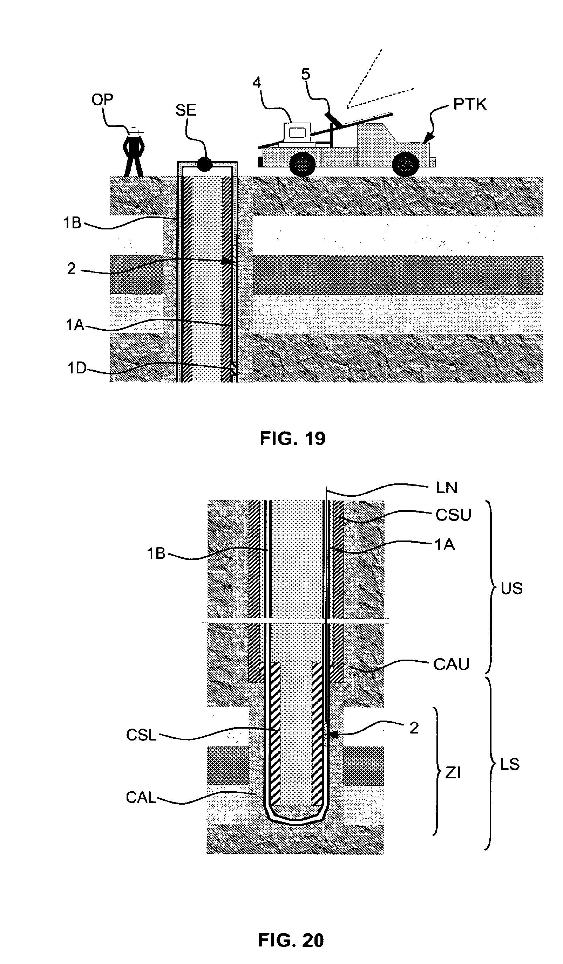

FIG. 19 illustrates operation of the micro-logging system with the deploying means of FIG. 16. According to this mode of operation, the micro-logging tool 2 is operated in memory mode, powered by a battery, and pumped down and up into the conveying tubing 1A. There is not any cable involved in the conveyance operation. Thus, a simple, small and less costly pick-up truck PTK without any drum can be used for the logging operation compared to the previous conveyance methods. The operator OP fits the micro-logging tool 2 into the conveying tubing 1A. Then, he connects the conveying tubing 1A and the return tubing 1B with a set of surface equipment SE comprising a portable pump, hydraulic loops, and a miniature blow-out preventer. When logging operations begin, the micro-logging tool 2 is pumped down until a restriction 10 (see FIG. 16 for details) is reached. This is indicated to the operator OP by a sudden rise of the pressure in the pump. The operator OP reverses the flow of the pump in order to pump up the micro-logging tool 2. The data that are measured are stored in the memory 41 of the micro-logging tool 2. Once at the surface, the data stored in the micro-logging tool 2 can be downloaded into a control and data acquisition unit 4 in the pick-up truck PTK. The data may be either downloaded by retrieving the micro-logging tool from the tubing and coupling it to an appropriate interface (not shown) of the control and data acquisition unit, or wirelessly transmitting to the control and data acquisition unit 4. The data may be further transmitted via e.g. satellite link 5 to client's office.

All the above mentioned surface equipments (FIGS. 15 to 19) are easy to handle by a single operator because of the lightweight of the elements involved. In particular, the micro-logging tool can be operated by one person because of its lightweight and small-size (a diameter of 1.27 centimeters or 0.5 inches, and a length of 6 meters or 20 feets). All the above mentioned tasks/steps may be accomplished by a single operator. Thus, compared to typical open-hole wireline logging systems requiring at least two to three persons on the well site, the micro-logging system of the invention has significantly lower operating cost.

In the above description, completion examples have been depicted in which the casing diameter is the same throughout the depth of the well. In this situation, the tubing is installed at the same time as the casing installed before cementing operation takes place.

FIG. 20 is a front cross-section view in a cased well illustrating an alternate completion wherein the well has at least two casing diameters throughout the depth of the well. Such a situation corresponds to the occurrence of subsequent drilling and cementing operations and defines an upper section US and a lower section LS of the well. The upper section US is first drilled, cased CSU, and cemented CAU. Subsequently, the lower section LS is drilled until the well reaches desirable depth. Then, a smaller diameter casing with a tubing 1A, 1B on the side are run inside the upper casing CSU, and installed into the subsequently drilled lower section LS of the well. Finally, the lower section casing CSL is cemented in place. Thus, the tubing 1 A, 1 B is positioned outside the lower section casing CSL and inside the concrete layer CAL of the cased annulus over a distance along the lower section LS casing corresponding to at least a zone of interest ZI for which measurements (resistivity, temperature, etc...) are to be performed. According to this alternate completion, most of the measurements cannot be performed when the micro-logging tool 2 travels through the upper section US of the casing.

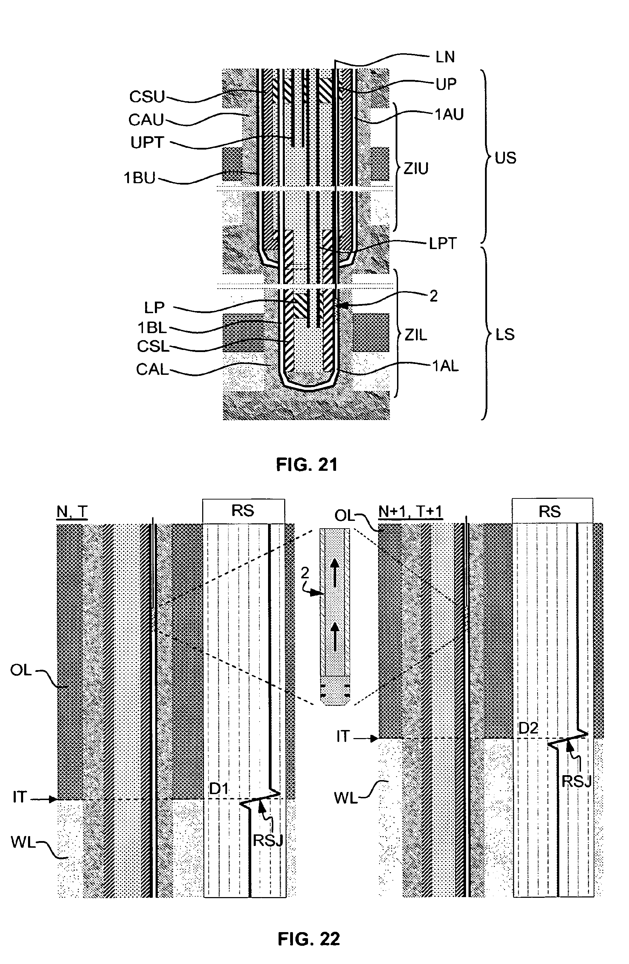

FIG. 21 is a front cross-section view in a cased well illustrating another alternate completion wherein the well has at least two casing diameters throughout the depth of the well, and wherein the upper section also contains zones of interest.
Firstly, the upper section US is drilled, the upper section casing CSU with an upper section tubing 1AU, 1BU on the side are run, installed and cemented CAU in placed. The upper section conveying tubing 1AU and the upper section return tubing 1 BU are connected through a U-shape portion of tubing positioned on the side of the upper section casing CSU. Thus, the inside of the upper section casing is free of any tubing at this stage. Then, the lower section LS can be drilled. When the drilling of lower section reaches a desirable depth, a lower section casing CSL with a lower section tubing 1AL, 1 BL on the side are run inside the upper section casing CSU, installed and cemented CAL in placed. Therefore, in the upper section US as well as in the lower section LS, there is always a tubing 1AU, 1 BU, 1AL, 1 BL outside the casing CSU, CSL in the cemented annulus CAU, CAL. The upper section tubing 1AU enables measuring desired upper zone of interest ZIU with the micro-logging tool 2 travelling in the upper section tubing 1AU. The lower section tubing 1AL enables measuring desired lower zone of interest ZIL with the micro-logging tool 2 travelling in the lower section tubing 1AL. An upper packer UP is installed at the top of the upper section US. It provides seals between the upper casing CSU and the upper packer UP, and allows the upper production tubing UPT, the lower production tubing LPT, the lower section conveying tubing 1AL, and the lower return tubing 1 BL to pass through and seals them off against the upper packer UP. A lower packer LP is installed at the top of the lower section LS for sealing the lower production tubing LPT.

Similarly, in well comprising more than two different casing diameters with various zones of interest, a similar completion method as hereinbefore described is still applicable. Every section of casing has its own set of conveying tubing and return tubing in order to provide an access to zones of interest for measurements survey.

FIGS. 22 to 32 show various applications of the micro-logging system of the invention.

FIG. 22 shows a first application wherein time-lapse data related to the geological formation resistivity are measured during the production phase.

During production of a hydrocarbon well, oil is pumped to the surface. Thus, the oil-bearing zone is depleted while the water replaces the oil and migrates into the producing zone. Operators are interested in monitoring how the interface IT between water WL and oil OL close to the production zone is moving time after time. Currently, there is not any method for predicting the water breakthrough until water is effectively flowing into the producing section of the well. Further, disposing water from produced oil is very expensive.

According to the first application, the system of the invention can be used to monitor the evolution of oil/water interface IT based on time-lapse resistivity measurements RS. In effect, the resistivity of water is lower than the resistivity of oil. In the run number N at the time T of the life of the well (shown in the left-hand side of FIG.22), the resistivity log comprises a resistivity jump RSJ corresponding to a first depth D1 of the oil/water interface IT. After a certain period of time, another run number N+1 at time T+1 of the life of the well (shown in the right-hand side of FIG.22), the resistivity log comprises another resistivity jump corresponding to a second depth of the oil/water interface IT. The jump in the resistivity log moving upward indicates that the oil/water interface IT moves upward.

By performing more logs and collecting more run at different time, the time-lapse data may be interpreted to show the trend of potential water breakthrough. Monitoring the oil/water interface IT enables predicting when the water will start flowing into the producing section of the well, and taking proper actions in order to prevent excessive water production.

FIG. 23 shows a second application wherein time-lapse data related to the measured position of the casing collars CC for depth correlation for any kind of measurements log.

The casing collars CC are characterized by a larger thickness than the casing CS. Thus, a casing collar generates a higher level of resistivity signal. The depth of the logs from different runs can be correlated to each other by the signatures of the casing collars CC in the resistivity log RS. Further, a micro-logging tool 2 comprising a plurality of receiver arrays, i.e. different depth of investigation, has different sensitivity to the casing and to the geological formation. More precisely, the short array TxAS is more sensitive to the casing CS and casing collar CC, while the long array TxAL is more sensitive to the geological formation GF. In the depicted example, the micro-logging tool 2 also measures the oil/water interface IT as described in relation with FIG. 22. In the run number N at the time T of the life of the well (shown in the left-hand side of FIG.23), the short array TxAS picks up larger signals (plain line) from the casing collar CC while the long array picks TxAL up larger signals (dotted line) from the formation GF, for example from water/oil interface IT. After a certain period of time, another run number N+1 at time T+1 of the life of the well (shown in the right-hand side of FIG.23), the signatures of the casing collars CCSig from both the short TxAS and long TxAL arrays stay the same, while the resistivity jump RSJ from water/oil interface IT move up. Generally, the casing collars CC always stays at the same position within the well. Thus, any depth mismatch from run number N to run number N+1 can be corrected. Such depth mismatch may be due to the wireline LN cable being stretched. The log analysts can align the depths CCD of the collars in the two logs presenting a mismatch in order to get a depth correlation for the water/oil interface IT. Though, this particular example has been described in relation with depth correlation for the water/oil interface IT, the time-lapse data related to the measured position of the casing collars may be used for depth correlation for any kind of measurements log (e.g. temperature, gamma-ray, pressure, magnetometer, etc...).

FIG. 24 shows a third application wherein time-lapse data related to resistivity survey is used to detect water breakthrough or cross flow due to cement damages. This is particularly useful to monitor the integrity of the cemented casing of the well.

In the run number N at the time T of the life of the well (shown in the left-hand side of FIG.24), the resistivity log RS shows different signal levels corresponding to different zones and particular signature RSJ1, RSJ2 (resistivity jump) at the bed boundaries BD1, BD2. The resistivity of water WL is lower than the resistivity of impermeable zone IZ. The resistivity of impermeable zone IZ is lower than the resistivity of pay zone OL. Thus, the value of resistivity and the bed boundaries signature enables the log analysts identifying the different zones and boundaries.

After a certain period of time, another run number N+1 at time T+1 of the life of the well (shown in the right-hand side of FIG.24), the signal level at the lower part of the impermeable zone IZ increases and a new signature (resistivity jump RSJ3) indicating the occurrence of a new boundary in the impermeable zone. The water being more conductive than the impermeable zone, the water layer in the impermeable zone decreases the overall measured resistivity of the zone where water starts to migrate. This suggests that water is breaking WBK through the interface of cemented annulus CA and geological formation GF. Thus, the occurrence of a loss of seals of the cemented annulus is detected and appropriate known remedial techniques may be implemented.

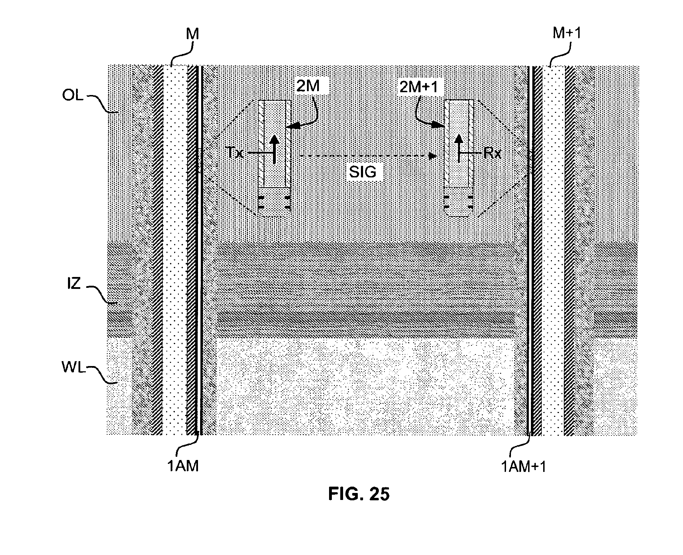

FIG. 25 shows a fourth application wherein the micro-logging system of the invention is used to perform cross-well resistivity survey. The cross-well resistivity survey enables measuring characteristics of the geological formation across two adjacent wells. This further enables improving the radial depth of investigation without increasing the spacing between the transmitter and receiver array in the micro-logging tool. FIG. 25 is a front cross-section view in a hydrocarbon reservoir showing a first well M and a second well M+1. A first micro-logging tool 2M comprising a transmitter Tx is lowered into the first well M. A second micro-logging tool 2M+1 comprising a receiver Rx is lowered into the second well M+1. Both micro-logging tools are lowered at approximately the same depth. Signals SIG are transmitted from the transmitter Tx of the first micro-logging tool 2M, propagate through the geological formation GF and are picked-up by the receiver Rx of the second micro-logging tool 2M+1. Thus, resistivity data related to the geological formation across the two wells can be obtained. The same survey can be performed from time to time in order to generate time-lapse images of the geological formation. The geological formation GF between the two wells can be mapped out into a 3-D image. Advantageously, there is no barrier of metallic casing making regular electromagnetic measurements difficult.

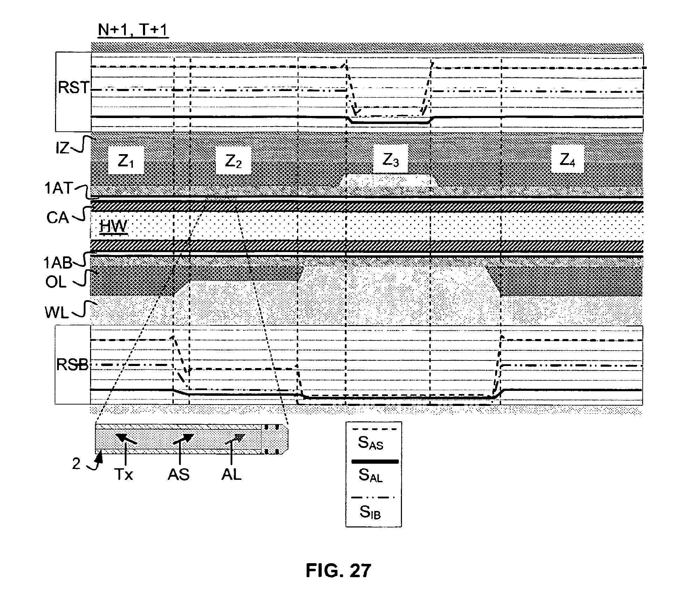

FIGS. 26 and 27 show a fifth application wherein time-lapse data related to resistivity survey are used to detect non-uniform water breakthrough in horizontal well. In a horizontal well HW, the locations of the bed boundaries and the resistivity of the different layers can be determined by mathematically inverting the data obtained from resistivity survey made by micro-logging tool comprising multiple arrays having different radial depths of investigation. In the depicted example, the micro-logging tool 2 performs resistivity measurement according to two different radial depths of investigation. Advantageously, a top and bottom conveying tubings 1AT, 1AB are positioned in the top portion and in the bottom portion of the cemented annulus CA of the horizontal well, respectively. Thus, the micro-logging tool 2 can be run in the top conveying tubing 1AT and in the bottom conveying tubing 1AB. This enables performing two logging runs in order to generate a top and bottom log of the formation above and below the horizontal well HW, respectively.

FIG. 26 shows a horizontal well, top and bottom logs related to the run number N at the time T of the life of the well.

The top log of run number N (top part) shows the oil-bearing zone OL mainly measured by the short array TxAS, and the conductive impermeable zone IZ mainly measured by the long array TxAL. The resistivity of the oil-bearing zone OL is higher than the resistivity of the upper conductive impermeable zone IZ. Due to the constant resistivity measured by both the short and long arrays along this portion of the horizontal well, the inverted boundary IB above the horizontal well HW has a constant distance from the wellbore.

The bottom log RSB of number N (bottom part) shows the oil-bearing zone OL mainly measured by the short array TxAS, and the conductive lower water-bearing zone WL mainly measured by the long array TxAL. The resistivity of the oil-bearing zone OL is higher than the resistivity of the conductive lower water-bearing zone WL. Due to the constant resistivity measured by both the short and long arrays along this portion of the horizontal well, the inverted boundary IB below the horizontal well HW has a constant distance from the wellbore.

FIG. 27 shows a horizontal well, top and bottom log related to another run number N+1 after a certain period of time, i.e. at time T+1 of the life of the well. In the run number N+1, the water starts to break through some of the zones.

The top log RST of run number N+1 (top part) shows similar resistivity for the first Z1, second Z2 and fourth Z4 zone measured by both short AS and long AL arrays. Therefore, the inverted boundary IB distance is expected to be the same in these zones. The top log RST of run number N+1 (top part) shows a drop in resistivity RSD for the third zone Z3 measured by both short AS and long AL arrays. This is the indication of a possible water breakthrough in the third zone Z3. The inverted boundary IB distance gives an indication of the position of the contacting interface between oil and water.

The bottom log RSB of number N (bottom part) shows similar resistivity for the first Z1 and fourth Z4 zone measured by both short AS and long AL arrays. Therefore, the inverted boundary IB distance is expected to be the same in these zones. The top log RST of run number N+1 (top part) shows different drops in resistivity measured by both short AS and long AL arrays for the second Z2 and third Z3 zone. This is the indication that, in the second zone Z2, the inverted boundary IB distance moves up. The oil/water interface IT has not reached the horizontal wellbore. However, there is a risk that the second zone Z2 may produce water in the future. Additional resistivity surveys at later time may help controlling the evolution of the position of the contacting interface between oil and water. Further, in third zone Z3, the inverted boundary IB distance is zero, indicating that the third zone Z3 is flooded with water. The third zone produces water and an appropriate zonal isolation operation may be implemented. Possibly, further time-lapse data based on subsequent resistivity survey may help the log analysts in deciding whether the second zone Z2 also needs to be isolated.

Thus, with the invention, the log analysts may interpret the time-lapse data related to subsequent resistivity surveys in order to evaluate the dynamics of the oil/water interface IT. The log analysts may further combine the logs above and below the horizontal well in order to describe the boundary and geometries of the water zone all along the life of the well.

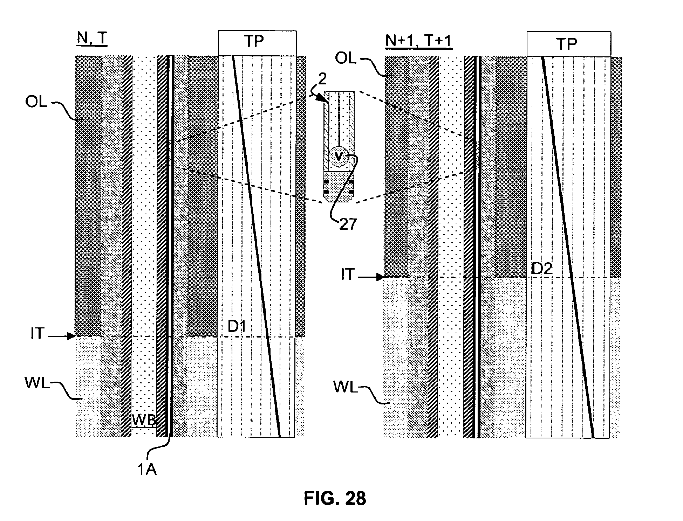

FIG. 28 shows a sixth application wherein time-lapse data related to the temperature profile of the well is measured during the production phase.

According to the sixth application, the system of the invention can be used to monitor the evolution of the down-hole temperature based on time-lapse temperature measurements TP made by a micro-logging tool 2 comprising a temperature sensor 27 as hereinbefore described. In the run number N at the time T of the life of the well (shown in the left-hand side of FIG.28), the temperature log shows that the deeper the depth is, the higher the temperature of the surrounding formation is. This corresponds to typical geothermal condition of a vertical well. After a certain period of time, another run number N+1 at time T+1 of the life of the well (shown in the right-hand side of FIG.28), the temperature log shows a temperature profile similar to the run number N, even though the oil/water interface IT rises up. The temperature log can show varying geothermal conditions, but cannot show the evolution of the depth of the oil/water interface IT.

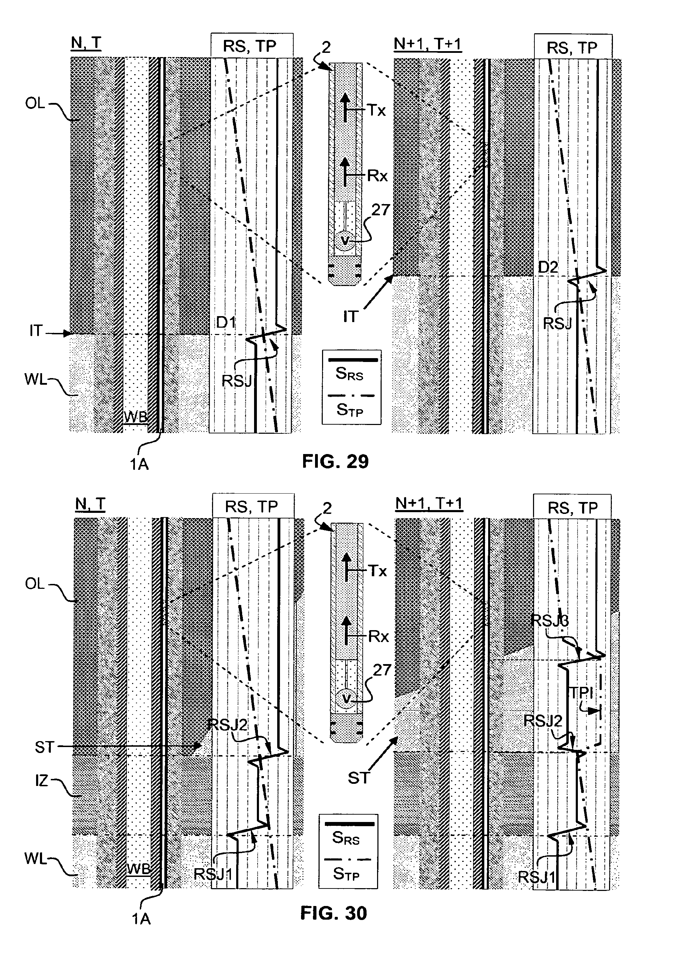

FIGS. 29 through 32 illustrate how a micro-logging tool string measuring different parameters of the formation surrounding the borehole can be used to obtain logs of complementary measurements helping the log analysts to decipher more information of the formation during the production phase.

FIG. 29 shows a seventh application wherein time-lapse data related to the geological formation resistivity and the temperature profile of the well are simultaneously measured during the production phase.

According to the seventh application, the system of the invention can be used to monitor the evolution of the resistivity RS and temperature TP measurements made by a micro-logging tool string 2 comprising a micro-resistivity tool TxRx and micro-temperature tool 27 performing combined resistivity and temperature measurement as hereinbefore described. Thus, both resistivity and temperature logs can be obtained in a single trip of the micro-logging tool 2 in the conveying tubing 1A.

In the run number N at the time T of the life of the well (shown in the left-hand side of FIG. 29), the resistivity log RS enables detecting the position of the oil/water interface IT while the temperature log provides the temperature profile of the well.

After a certain period of time, in another run number N+1 at time T+1 of the life of the well (shown in the right-hand side of FIG. 29), the resistivity log enables detecting the migration of the oil/water interface IT by the position of the resistivity jump RSJ while the similar temperature log indicates that geothermal condition of well is unchanged.

FIG. 30 shows an eighth application wherein time-lapse data related to simultaneous resistivity RS and temperature TP surveys are used to detect steam breakthrough. In this application, the temperature sensor is used to differentiate water in liquid state from water in steam state. The steam ST may be used to enhance oil production. The steam ST is pumped from a nearby injection well (not shown) in order to push the oil toward the producing well. The steam ST may also be generated as a consequence of changing geothermal conditions.

In the run number N at the time T of the life of the well (shown in the left-hand side of FIG. 30), the resistivity log RS enables differentiating the water zone WL, the impermeable zone IZ, and the oil zone OL, while the temperature log TP shows a continuous and smoothly decreasing temperature profile from the bottom to the top of the well.

After a certain period of time, in another run number N+1 at time T+1 of the life of the well (shown in the right-hand side of FIG. 30), the resistivity log RS shows an additional resistivity jump RSJ3 and a decrease of resistivity in the lower section of the oil zone OL, while the temperature log shows an increase of temperature TPI in the lower section of the producing zone. The decrease of resistivity in the lower section of the oil zone can be caused by either steam breakthrough from the nearby injection well, or water breakthrough from another zone. Considering the resistivity log alone, the log analysts cannot differentiate liquid water from steam water. The increase of the temperature at the lower section of the producing zone indicates a change of the geothermal conditions in the producing zone. Thus, the log analysts can deduce that the observed modifications of resistivity RSJ3 and temperature TPI are caused by the steam water breakthrough and not by the liquid water breakthrough.

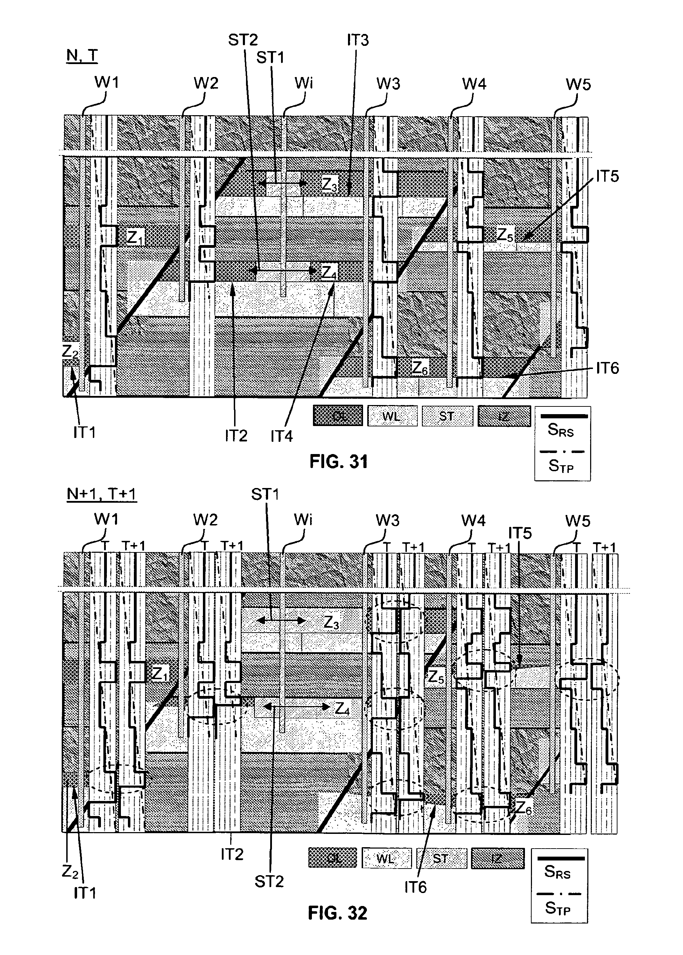

FIGS. 31 and 32 show a ninth application wherein a plurality of micro-logging system of the invention comprising a plurality of micro-logging tool string performing combined resistivity and temperature logs in a plurality of wells is used to perform time-lapse reservoir characterization during production. Various wells W1, W2, W3, W4, W5 and Wi have been drilled at different locations of the reservoir. The wells W1 to W5 are production wells, while the well Wi is a steam injection well. The system of the invention enables obtaining spatial data at different time from the different wells. The reservoir comprises different hydrocarbon-bearing zones Z1, Z2, Z3, Z4, Z5 and Z6 showing a high degree of compartmentalization. More precisely, the pay zones are separated by impermeable zones IZ or boundaries and are not necessarily connected to each other. In this case, the characterization of the reservoir is difficult because the data from one of the wells may not help in characterizing wells in other parts of the reservoir.

FIG. 31 illustrates the logging run number N at the time T of the life of the reservoir.

From the resistivity logs of logging run number N of all the wells W1 to W5, the reservoir engineer can determine the location of the oil bearing zones OL, the water flooded zone WL and the different boundaries of the impermeable zones IZ, and, thus, he can characterize the reservoir.

The first well W1 extends through two producing zone Z1 and Z2. The second zone Z2 comprises an oil/water interface IT1. This oil/water interface IT1 may migrate as the oil being produced from zone Z2.

The second well W2 extends through two producing zone Z1 and Z4. The fourth zone Z4 comprises an oil/water interface IT2, which might migrate as the oil being produced from zone Z4.

The steam injection well Wi extends through the third zone Z3 and fourth zone Z4. Its purpose is to inject steam in order to enhance the production of oil from zone Z3 and Z4, possibly via the second Z2, third Z3 and/or fourth Z4 well.

The third well W3 extends through the third zone Z3, the fourth zone Z4, and the sixth zone Z6. All these zones comprise oil/water interfaces IT3 and IT4. As indicated above, the third zone Z3 and the fourth zone Z4 are subjected to steam injection. The fourth well W4 extends through the third zone Z3, the fifth zone Z5, and the sixth zone Z6. All these zones comprise oil/water interfaces IT5 and IT6.

The well W5 extends through the fifth zone Z5 and, possibly, other producing zones that are not represented in the drawing.

The reservoir engineer can deduce (see description related to FIGS. 22-24) from the resistivity logs where oil can be produced, and where the well needs to be isolated from formation in order to prevent water production. He can further deduce (see description related to FIG. 30) from the smooth temperature logs that there is no steam breakthrough. Therefore, there is no immediate action required to prevent steam from getting into production.

FIG. 32 illustrates another logging run number N+1 at time T+1 of the life of the reservoir, namely a certain period of time after the logging run number N.

In the first well W1, the log of the second zone Z2 shows a shift of resistivity boundary, but no change of temperature profile. This indicates the presence of water, but not of steam. In case additional information relating to the second zone Z2 from other adjacent wells would be also available, the reservoir engineers would be able to deduce whether the change in resistivity is caused by oil/water interface IT1 rising up or by water breakthrough from somewhere else.

In the second well W2, the log of the fourth zone Z4 shows a shift of resistivity boundary, but no change of temperature profile. This indicates the migration of the oil/water interface IT2, but not of steam. As the fourth zone Z4 is supposed to be subjected to steam injection ST2, the reservoir engineers can deduce that the steam front is not reaching the second well W2. In case the steam injection does not result in increasing the oil production from the second well W2, it is the indication that the fourth zone Z4 comprises a compartmentalization. The compartmentalization prevents the steam from pushing the oil from the fourth zone Z4 into the second well W2. The compartmentalization may be positioned between the steam injection well Wi and the second Well W2. This data encourages reservoir engineers to further investigate the structure of the reservoir in this area in order to identify possible boundaries of compartmentalization that have been missed before.

In the third well W3, the log of the third zone Z3 shows significant shifts of both resistivity boundary and temperature profile. This is a clear indication that the steam ST1 has broken through the third well W3 in the third zone Z3. A change of temperature profile in the log of the third zone Z3 of the fourth well W4 may further indicate that the steam ST2 has also broken through the fourth well W4, or has not reach the fourth well W4. In case the resistivity and the temperature profile in the log of the third zone Z3 of the fourth well W4 are unchanged, this is an indication that the steam front is positioned between the third well W3 and the fourth well W4 in the third zone Z3.

If a further identification of the steam front position is required, the cross-well survey as hereinbefore described in relation with FIG. 25 can be implemented. For example, a transmitter can be lowered in the third well W3 while a receiver can be lowered in the fourth well W4. In this case, a more precise location of the steam front in the third zone Z3 between the third well W3 and the fourth well W4 can be obtained.

Further, the log of the fourth zone Z4 shows significant shifts of both resistivity boundary and temperature profile. This is also a clear indication that the steam ST2 has broken through the fourth zone Z4 of the third well W3.

Furthermore, the log of the sixth zone Z6 shows a shift of resistivity boundary, but no change of temperature profile. Again, this indicates the migration of oil/water interface IT6, but not steam breakthrough. The reservoir engineers might be interested to look at the data from the sixth zone Z6 in the adjacent fourth well W4.

In the fourth well W4, the log of the sixth zone Z6 shows a shift of resistivity boundary, but no change of temperature profile. This indicates the migration of water, but not steam. However, in the sixth zone Z6, the depth D1 of the oil/water interface IT6 in the third well W3 is different than the depth D2 of the oil/water interface IT6 interface in the fourth well W4. This indicates a non-uniform (tilted) water migration. Further, in the fourth well W4, the log of the fifth zone Z5 shows a shift of resistivity boundary, but no change of temperature profile. This indicates the migration of water, but not steam. The reservoir engineers might be interested to look at the data from the fifth zone Z5 in the adjacent fifth well W5.

In the fifth well W5, the log of the fifth zone Z5 shows a shift of resistivity boundary, but no change of temperature profile. This indicates the migration of water, but not steam. However, in the fifth zone Z5, the depth D3 of the oil/water interface IT5 in the fourth well W4 is different than the depth D4 of the oil/water interface in the fifth well W5. This indicates a non-uniform (tilted) water migration.

An important advantage of the micro-logging system of the invention is that there is not any interruption of the production of any well in the oil/gas field while the surveys are performed on multiple wells.

The above application examples illustrate that the micro-logging system of the invention enables providing time-resolved spatial data for reservoir characterization during production. The examples show 2-D slice of a possible 3-D situation. The same technique is applicable to 3-D situations. The micro-logging system of the invention provides a low-cost solution for the 4-D production monitoring, when the time is accounted as an additional dimension.

### FINAL REMARKS

It is to be mentioned that the invention is not limited to onshore hydrocarbon well and can also be used in relation with offshore hydrocarbon well. Further, though some embodiments have been described in relation to drawings showing a vertical well-bore, said embodiment may also apply in a horizontal or deviated well-bore.

Though particular applications of the invention relating to the oilfield industry have been described, the invention is also applicable to other kind of industry, e.g. the water industry or the like.

Through, various applications relating to logging operations of the geological formation surrounding the borehole have been described; the invention is also applicable to non-logging operations. As a first example of non-logging operation, the micro-logging system of the invention may also be used as a means of communication channel with sensors (e.g. pressure sensors) permanently placed in the formation or actuators (e.g. valves) permanently placed in the completion string. The micro-logging tool can be conveyed down at the depth of the sensors or actuators, energize them and exchange data with them (either by gathering measurements of the sensors, or sending commands to actuators). With the system of the invention, there is no need to have a wire permanently connecting the surface equipment to the downhole sensors/actuators, or to interrupt the production. As a second example of non-logging operation, the micro-logging system of the invention may also be used as a means of controlling the state of the casing, the cemented annulus, or other objects surrounding the well. A tool is positioned inside the casing to perform a "combined" measurement with a micro-logging tool deployed in the conveying tubing. For example, a transmitter (e.g. acoustic, electromagnetic, nuclear, etc...) can be placed inside the casing and a receiver can be placed outside of the casing to measure certain properties of e.g. the casing, the cement, etc... Furthermore, the invention is not limited to cemented annulus as depicted in the drawings. In effect, any other open-hole completion material, for example gravel pack, in the annulus may embed the conveying and return tubing.

The drawings and their description hereinbefore illustrate rather than limit the invention.

Any reference sign in a claim should not be construed as limiting the claim. The word "comprising" does not exclude the presence of other elements than those listed in a claim. The word "a" or "an" preceding an element does not exclude the presence of a plurality of such element.

## Claims

1. A micro-logging system of a geological formation (GF) surrounding a cased borehole (WB) comprising a casing (CS) and an annulus (CA), the micro-logging system comprising:
- a tubing comprising a conveying tubing (1A) permanently embedded in at least a section of the annulus (CA) and extending substantially parallel to the casing (CS) at least over a distance corresponding to a zone of interest (ZI),
- a micro-logging tool string (2) deployable in the conveying tubing (1 A), and
- means for deploying the micro-logging tool string (2) in the conveying tubing (1 A) at desired depths along the cased borehole (WB),
**characterized in that** the system further comprises stand-offs (10A, 10B) along the casing (CS) in the annulus (CA) for protecting the tubing (1A, 1B) against perforations.

2. The micro-logging system according to claim 1, wherein the tubing further comprises a return tubing (1 B) coupled to the conveying tubing (1A) at a down-hole location of the cased borehole (WB), the return tubing (1 B) being permanently embedded in at least a section of the annulus (CA).

3. The micro-logging system according to claim 1, wherein the means for deploying the micro-logging tool string (2) comprises a pump (SE) coupling the conveying tubing (1 A) to the return tubing (1 B) at an up-hole location of the cased borehole such as to form a continuous tubing loop.

4. The micro-logging system according to claim 1, wherein the means for deploying the micro-logging tool string (2) comprises at least one slick line (SL) or one wireline (LN) coupled to one end of the micro-logging tool string (2) and deployed by a drum (DR).

5. The micro-logging system according to any one of the preceding claims, wherein a fluid is filled in the conveying tubing (1A) and the return tubing (1B), the fluid being chosen among the group of fluid comprising oil, mud, water, and synthetic fluid.

6. The micro-logging system according to any one of the preceding claims, wherein the micro-logging system further comprises a control and data acquisition unit (4).

7. The micro-logging system according to claim 6, wherein the micro-logging tool (2) and the control and data acquisition unit (4) comprises a first and a second wireless transmission module for transferring measured data of the micro-logging tool, respectively.

8. The micro-logging system according to claim 6, wherein the micro-logging tool (2) and the control and data acquisition unit (4) comprises a first and a second wire interface for transferring measured data of the micro-logging tool, respectively.

9. The micro-logging system according to any one of the claims 6 to 8, wherein the control and data acquisition unit (4) is coupled to a satellite link (5).

10. The micro-logging system according to any one of the preceding claims, wherein the micro-logging tool string (2) comprises a micro-resistivity tool (MRT) or a micro-temperature tool (MTT), or a micro-gamma-ray tool (MOT), or a micro-pressure tool (MOT), or a micro-magnetometer tool (MOT), or a combination thereof.

11. The micro-logging system according to any one of the claims 1 to 10, wherein the conveying tubing (1 A) has a circular cross-section, the micro-logging tool string (2) comprising a directional sensor (39) for determining that a focusing (FCS) of the micro-logging tool string (2) is pointed towards the geological formation (GF).

12. The micro-logging system according to any one of the claims 1 to 10, wherein the conveying tubing (1 A) has an oval cross-section that is oriented with respect to the casing (CS) to orientate the micro-logging tool string (2) in a direction such that a focusing (FCS) of the micro-logging tool string (2) is pointed towards the geological formation (GF).

13. The micro-logging system according to any one of the claims 1 to 12, wherein at least a portion of the casing (CS2) is made of non-magnetic metallic materials, and at least a portion of the conveying tubing (1 C) is made of non-conductive material, said portions corresponding to depths where the zone of interest (ZI) is located.

14. The micro-logging system according to any one of the claims 1 to 12, wherein:
- the casing comprises an upper section casing (CSU) and a lower section casing (CSL) of different diameters, and
- the system comprises an upper section conveying tubing (1AU) permanently embedded in at least a section of the annulus (CA) and extending substantially parallel to the upper section casing (CSU), and a lower section conveying tubing (1AL) permanently embedded in at least a section of the annulus (CA) and extending substantially parallel to the lower section casing (CSL).

15. The micro-logging system according to any one of the preceding claims, wherein the annulus is filled with cement or an open-hole completion material.

16. A method of micro-logging a geological formation surrounding a cased borehole comprising a casing and an annulus, the micro-logging method comprising the steps of:
- providing a conveying tubing by embedding the conveying tubing in the annulus, the conveying tubing extending substantially parallel to the casing,
- deploying a micro-logging tool at least in the conveying tubing at, at least, a first depth along the cased borehole,
- measuring at least one characteristic of the geological formation surrounding the cased borehole at said depth,
- repeating the deployment and measurement steps at, at least, the first depth such as to monitor variation of the measured characteristic over time, and
- inferring geological formation properties from the time varying measured characteristic,
**characterized in that** the method further comprises providing stand-offs along the casing in the annulus for protecting the tubing against perforations.

17. The micro-logging method according to claim 16, wherein the provision step further comprises coupling the conveying tubing to a return tubing such as to form a continuous tubing loop, and wherein the deployment step consists in pumping a fluid up or down in the conveying tubing and the return tubing.

18. The micro-logging method according to claim 16, wherein the deployment step consists in deploying a slick line or a wireline coupled to the micro-logging tool string in at least the conveying tubing by means of a drum.

19. Application of the micro-logging method according to any one of the claims 16 to 18, to monitor occurrence of water breakthrough in a producing well by performing resistivity logs over time of the surrounding geological formation at least over a depth interval corresponding to a producing zone, and monitoring an evolution of a position of a resistivity jump over time.

20. Application of the micro-logging method according to any one of the claims 16 to 18, to monitor occurrence of steam breakthrough in a producing well by performing temperature logs over time of the surrounding geological formation at least over a depth interval corresponding to a producing zone, and monitoring an evolution of the temperature over time.

## Patentansprüche

1. Mikroprotokollierungssystem einer geologischen Formation (GF), die ein verrohrtes Bohrloch (WB), das ein Futterrohr (CS) und einen Ringraum (CA) aufweist, umgibt, wobei das Mikroprotokollierungssystem umfasst:
- einen Rohrstrang, der einen Förderrohrstrang (1A) aufweist, der dauerhaft in wenigstens einen Abschnitt des Ringraums (CA) eingebettet ist und sich wenigstens über eine einer interessierenden Zone (ZI) entsprechende Strecke im Wesentlichen parallel zu dem Futterrohr (CS) erstreckt,
- einen Mikroprotokollierungs-Werkzeugstrang (2), der in dem Förderrohrstrang (1A) ausfahrbar ist, und
- Mittel zum Ausfahren des Mikroprotokollierungs-Werkzeugstrangs (2) in dem Förderrohrstrang (1A) auf gewünschte Tiefen längs des verrohrten Bohrlochs (WB),
**dadurch gekennzeichnet, dass** das System ferner Abstandshalter (10A, 10B) längs des Futterohrs (CS) in dem Ringraum (CA) umfasst, um den Rohrstrang (1A, 1 B) vor Perforationen zu schützen.

2. Mikroprotokollierungssystem nach Anspruch 1, wobei der Rohrstrang ferner einen Rückleitungsrohrstrang (1 B) umfasst, der mit dem Förderrohrstrang (1A) an einem Ort unten im Bohrloch des verrohrten Bohrlochs (WB) gekoppelt ist, wobei der Rückleitungsrohrstrang (1 B) dauerhaft in wenigstens einen Abschnitt des Ringraums (CA) eingebettet ist.

3. Mikroprotokollierungssystem nach Anspruch 1, wobei die Mittel zum Ausfahren des Mikroprotokollierungs-Werkzeugstrangs (2) eine Pumpe (SE) umfassen, die den Förderrohrstrang (1A) mit dem Rückleitungsrohrstrang (1 B) an einem Ort oben im Bohrloch des verrohrten Bohrlochs koppelt, um so eine ununterbrochene Rohrstrangschleife zu bilden.

4. Mikroprotokollierungssystem nach Anspruch 1, wobei die Mittel zum Ausfahren des Mikroprotokollierungs-Werkzeugstrangs (2) wenigstens eine Schlickleitung (SL) oder eine Drahtleitung (LN), die mit einem Ende des Mikroprotokollierungs-Werkzeugstrangs (2) gekoppelt ist und mittels einer Trommel (DR) ausgefahren wird, umfasst.

5. Mikroprotokollierungssystem nach einem der vorhergehenden Ansprüche, wobei in den Förderrohrstrang (1A) und in den Rückleitungsrohrstrang (1 B) ein Fluid gefüllt ist, wobei das Fluid aus der Gruppe von Fluiden gewählt ist, die Öl, Schlamm, Wasser und synthetisches Fluid enthält.

6. Mikroprotokollierungssystem nach einem der vorhergehenden Ansprüche, wobei das Mikroprotokollierungssystem ferner eine Steuerungs- und Datenerfassungseinheit (4) umfasst.

7. Mikroprotokollierungssystem nach Anspruch 6, wobei das Mikroprotokollierungswerkzeug (2) und die Steuerungs- und Datenerfassungseinheit (4) ein erstes bzw. ein zweites drahtloses Sendemodul für die Übertragung gemessener Daten des Mikroprotokollierungswerkzeugs umfassen.

8. Mikroprotokollierungssystem nach Anspruch 6, wobei das Mikroprotokollierungswerkzeug (2) und die Steuerungs- und Datenerfassungseinheit (4) eine erste bzw. eine zweite verdrahtete Schnittstelle für die Übertragung gemessener Daten des Mikroprotokollierungswerkzeugs umfassen.

9. Mikroprotokollierungssystem nach einem der Ansprüche 6 bis 8, wobei die Steuerungs- und Datenerfassungseinheit (4) mit einer Satellitenübertragungsstrecke (5) gekoppelt ist.

10. Mikroprotokollierungssystem nach einem der vorhergehenden Ansprüche, wobei der Mikroprotokollierungs-Werkzeugstrang (2) ein Mikrowerkzeug für spezifischen elektrischen Widerstand (MRT) oder ein Temperatur-Mikrowerkzeug (MTT) oder ein Gammastrahlungs-Mikrowerkzeug (MOT) oder ein Druck-Mikrowerkzeug (MOT) oder ein Magnetometer-Mikrowerkzeug (MOT) oder eine Kombination hiervon umfasst.

11. Mikroprotokollierungssystem nach einem der Ansprüche 1 bis 10, wobei der Förderrohrstrang (1A) einen kreisförmigen Querschnitt besitzt und der Mikroprotokollierungs-Werkzeugstrang (2) einen gerichteten Sensor (39) umfasst, um festzustellen, dass eine Fokussierung (FCS) des Mikroprotokollierungs-Werkzeugstrangs (2) zu der geologischen Formation (GF) gerichtet ist.

12. Mikroprotokollierungssystem nach einem der Ansprüche 1 bis 10, wobei der Förderrohrstrang (1A) einen ovalen Querschnitt besitzt, der in Bezug auf das Futterrohr (CS) orientiert ist, um den Mikroprotokollierungs-Werkzeugstrang (2) in eine Richtung zu orientieren, derart, dass eine Fokussierung (FCS) des Mikroprotokollierungs-Werkzeugstrangs (2) zu der geologischen Formation (GF) gerichtet ist.

13. Mikroprotokollierungssystem nach einem der Ansprüche 1 bis 12, wobei wenigstens ein Abschnitt des Futterrohrs (CS2) aus nichtmagnetischen Metallmaterialien hergestellt ist und wenigstens ein Abschnitt des Förderrohrstrangs (1C) aus nicht leitendem Material hergestellt ist, wobei die Abschnitte Tiefen entsprechen, wo sich die interessierende Zone (ZI) befindet.

14. Mikroprotokollierungssystem nach einem der Ansprüche 1 bis 12, wobei:
- das Futterrohr einen oberen Futterrohrabschnitt (CSU) und einen unteren Futterrohrabschnitt (CSL) mit unterschiedlichen Durchmessern aufweist und
- das System einen oberen Förderrohrstrang-Abschnitt (1AU), der dauerhaft in wenigstens einen Abschnitt des Ringraums (CA) eingebettet ist und sich im Wesentlichen parallel zu dem oberen Futterrohrabschnitt (CSU) erstreckt, und einen unteren Förderrohrstrang-Abschnitt (1AL), der dauerhaft in wenigstens einen Abschnitt des Ringraums (CA) eingebettet ist und sich im Wesentlichen parallel zu dem unteren Futterrohrabschnitt (CSL) erstreckt, umfasst.

15. Mikroprotokollierungssystem nach einem der vorhergehenden Ansprüche, wobei der Ringraum mit Zement oder mit einem offenporigen Verschlussmaterial gefüllt ist.

16. Verfahren zur Mikroprotokollierung einer geologischen Formation, die ein verrohrtes Bohrloch, das ein Futterrohr und einen Ringraum aufweist, umgibt, wobei das Mikroprotokollierungsverfahren die folgenden Schritte umfasst:
- Vorsehen eines Förderrohrstrangs durch Einbetten des Förderrohrstrangs in den Ringraum, wobei sich der Förderrohrstrang im Wesentlichen parallel zu dem Futterrohr erstreckt,
- Ausfahren eines Mikroprotokollierungswerkzeugs wenigstens in dem Förderrohrstrang und wenigstens über eine erste Tiefe längs des verrohrten Bohrlochs,
- Messen wenigstens einer Charakteristik der geologischen Formation, die das verrohrte Bohrloch umgibt, bei dieser Tiefe,
- Wiederholen der Ausfahr- und Messschritte wenigstens bei der ersten Tiefe, um so eine Veränderung der gemessenen Charakteristik im Lauf der Zeit zu überwachen,
- Schließen auf Eigenschaften der geologischen Formation anhand der zeitlich veränderlichen gemessenen Charakteristik,
**dadurch gekennzeichnet, dass** das Verfahren ferner das Vorsehen von Abstandshaltern längs des Futterrohrs in dem Ringraum umfasst, um den Rohrstrang vor Perforationen zu schützen.

17. Mikroprotokollierungsverfahren nach Anspruch 16, wobei der Bereitstellungsschritt ferner das Koppeln des Förderrohrstrangs mit einem Rückleitungsrohrstrang umfasst, um so eine ununterbrochene Rohrstrangschleife zu bilden, wobei der Ausfahrschritt aus dem Pumpen eines Fluids aufwärts oder abwärts in dem Förderrohrstrang und in dem Rückleitungsrohrstrang besteht.

18. Mikroprotokollierungsverfahren nach Anspruch 16, wobei der Ausfahrschritt aus einem Ausfahren einer Schlickleitung oder einer Drahtleitung, die mit dem Mikroprotokollierungs-Werkzeugstrang gekoppelt ist, wenigstens in dem Förderrohrstrang mittels einer Trommel besteht.

19. Anwendung des Mikroprotokollierungsverfahrens nach einem der Ansprüche 16 bis 18, um das Auftreten eines Wassereinbruchs in einem Förderbohrloch durch Ausführen von Protokollierungen des spezifischen elektrischen Widerstands der umgebenden geologischen Formation im Lauf der Zeit wenigstens über ein Tiefenintervall, das einer Förderzone entspricht, und durch Überwachen einer Entwicklung einer Position eines Sprungs des spezifischen elektrischen Widerstands im Lauf der Zeit zu überwachen.

20. Anwendung des Mikroprotokollierungsverfahrens nach einem der Ansprüche 16 bis 18, um das Auftreten eines Dampfeinbruchs in einem Förderbohrloch durch Ausführen von Temperaturprotokollierungen der umgebenden geologischen Formation im Lauf der Zeit wenigstens über ein einer Förderzone entsprechendes Tiefenintervall und durch Überwachen einer Entwicklung der Temperatur im Lauf der Zeit zu überwachen.

## Revendications

1. Système de micro-diagraphie d'une formation géologique (GF) entourant un trou de forage tubé (WB) comprenant un tubage (CS) et un espace annulaire (CA), le système de micro-diagraphie comprenant :
- un tubing comprenant un tube de transport (1A) encastré de façon permanente dans au moins une section de l'espace annulaire (CA) et s'étendant sensiblement parallèlement au tubage (CS) au moins sur une distance correspondant à une zone d'intérêt (ZI),
- une rame d'outils de micro-diagraphie (2) pouvant être déployée dans le tube de transport (1A) et
- un moyen permettant de déployer la rame d'outils de micro-diagraphie (2) dans le tube de transport (1A) à des profondeurs souhaitées le long du trou de forage cuvelé (WB),
**caractérisé en ce que** le système comprend en outre des stand-offs (10A, 10B) le long du tubage (CS) dans l'espace annulaire (CA) afin de protéger le tubing (1A, 1B) des perforations.

2. Système de micro-diagraphie selon la revendication 1, dans lequel le tubing comprend en outre un tube de retour (1B) couplé au tube de transport (1A) à un emplacement de fond de puits du trou de forage tubé (WB), le tube de retour (1B) étant encastré de façon permanente dans au moins une section de l'espace annulaire (CA).

3. Système de micro-diagraphie selon la revendication 1, dans lequel le moyen permettant de déployer la rame d'outils de micro-diagraphie (2) comprend une pompe (SE) couplant le tube de transport (1A) au tube de retour (1B) au niveau d'un emplacement de haut de puits du trou de forage tubé de façon à former une boucle de tubing continue.

4. Système de micro-diagraphie selon la revendication 1, dans lequel le moyen permettant de déployer la rame d'outils de micro-diagraphie (2) comprend au moins un câble lisse (SL) ou un câble métallique (LN) couplé à une extrémité de la rame d'outils de micro-diagraphie (2) et déployé par un tambour (DR).

5. Système de micro-diagraphie selon l'une quelconque des revendications précédentes, dans lequel un fluide remplit le tube de transport (1A) et le tube de retour (1B), le fluide étant choisi parmi le groupe de fluides comprenant l'huile, la boue, l'eau, et un fluide synthétique.

6. Système de micro-diagraphie selon l'une quelconque des revendications précédentes, dans lequel le système de micro-diagraphie comprend en outre une unité de commande et d'acquisition de données (4).

7. Système de micro-diagraphie selon la revendication 6, dans lequel l'outil de micro-diagraphie (2) et l'unité de commande et d'acquisition de données (4) comprennent des premier et second modules de transmission sans fil afin de transférer des données mesurées de l'outil de micro-diagraphie, respectivement.

8. Système de micro-diagraphie selon la revendication 6, dans lequel l'outil de micro-diagraphie (2) et l'unité de commande et d'acquisition de données (4) comprennent des première et seconde interfaces à fil permettant de transférer des données mesurées de l'outil de micro-diagraphie, respectivement.

9. Système de micro-diagraphie selon l'une quelconque des revendications 6 à 8, dans lequel l'unité de commande et d'acquisition de données (4) est couplée à une liaison satellite (5).

10. Système de micro-diagraphie selon l'une quelconque des revendications précédentes, dans lequel la rame d'outils de micro-diagraphie (2) comprend un outil de micro-résistivité (MRT) ou un outil de micro-température (MTT), ou un outil de micro-rayons gamma (MOT), ou un outil de micro-pression (MOT), ou un outil de micro-magnétomètre (MOT), ou une combinaison de ces derniers.

11. Système de micro-diagraphie selon l'une quelconque des revendications 1 à 10, dans lequel le tube de transport (1A) a une section circulaire, la rame d'outils de micro-diagraphie (2) comprenant un capteur directionnel (39) permettant de déterminer qu'une focalisation (FCS) de la rame d'outils de micro-diagraphie est pointée vers la formation géologique (GF).

12. Système de micro-diagraphie selon l'une quelconque des revendications 1 à 10, dans lequel le tube de transport (1A) a une section ovale qui est orientée par rapport au tubage (CS) afin d'orienter la rame d'outils de micro-diagraphie (2) dans une direction telle qu'une focalisation (FCS) de la rame d'outils de micro-diagraphie (2) est pointée vers la formation géologique (GF).

13. Système de micro-diagraphie selon l'une quelconque des revendications 1 à 12, dans lequel au moins une portion du tubage (CS2) est constituée de matériaux métalliques non magnétiques, et au moins une portion du tube de transport (1C) est constituée d'un matériau non conducteur, lesdites portions correspondant à des profondeurs où la zone d'intérêt (ZI) est située.

14. Système de micro-diagraphie selon l'une quelconque des revendications 1 à 12, dans lequel :
- le tubage comprend un tubage de section supérieure (CSU) et un tubage de section inférieure (CSL) de diamètres différents, et
- le système comprend un tube de transport de section supérieure (1AU) encastré de façon permanente dans au moins une section de l'espace annulaire (CA) et s'étendant sensiblement parallèlement au tubage de section supérieure (CSU), et un tube de transport de section inférieure (1AL) encastré de façon permanente dans au moins une section de l'espace annulaire (CA) et s'étendant sensiblement parallèlement au tubage de section inférieure (CSL).

15. Système de micro-diagraphie selon l'une quelconque des revendications précédentes, dans lequel l'espace annulaire est rempli de ciment ou d'un matériau de complétion en trou découvert.

16. Procédé de micro-diagraphie d'une formation géologique entourant un trou de forage tubé comprenant un tubage et un espace annulaire, le procédé de micro-diagraphie comprenant les étapes :
- de fourniture d'un tube de transport en encastrant le tube de transport dans l'espace annulaire, le tube de transport s'étendant sensiblement parallèlement au tubage,
- de déploiement de l'outil de micro-diagraphie au moins dans le tube de transport au niveau, au moins, d'une première profondeur le long du trou de forage tubé,
- de mesure d'au moins une caractéristique de la formation géologique entourant le trou de forage tubé à ladite profondeur,
- de répétition des étapes de déploiement et de mesure au niveau, au moins, de la première profondeur de façon à surveiller la variation de la caractéristique mesurée dans le temps, et
- de déduction des propriétés de formation géologique à partir de la caractéristique mesurée variant dans le temps,
**caractérisé en ce que** le procédé comprend en outre la fourniture de stand-offs le long du tubage dans l'espace annulaire afin de protéger le tubing des perforations.

17. Procédé de micro-diagraphie selon la revendication 16, dans lequel l'étape de fourniture comprend en outre le couplage du tube de transport à un tube de retour de façon à former une boucle de tubing continue, et dans lequel l'étape de déploiement consiste à pomper un fluide vers le haut ou vers le bas dans le tube de transport et le tube de retour.

18. Procédé de micro-diagraphie selon la revendication 16, dans lequel l'étape de déploiement consiste à déployer un câble lisse ou un câble métallique couplé à la rame d'outils de micro-diagraphie dans au moins le tube de transport au moyen d'un tambour.

19. Application du procédé de micro-diagraphie selon l'une quelconque des revendications 16 à 18, afin de surveiller l'occurrence d'une percée d'eau dans un puits de production en réalisant des diagrammes de résistivité dans le temps de la formation géologique environnante au moins sur un intervalle de profondeur correspondant à une zone de production, et en surveillant une évolution d'une position d'un saut de résistivité dans le temps.

20. Application du procédé de micro-diagraphie selon l'une quelconque des revendications 16 à 18, afin de surveiller l'occurrence d'une percée de vapeur dans un puits de production en réalisant des diagrammes de température dans le temps de la formation géologique environnante au moins sur un intervalle de profondeur correspondant à une zone de production, et en surveillant une évolution de la température dans le temps.
